(19) Europäisches Patentamt
European Patent Office
Office européen des brevets

(11) **EP 2 791 180 B1**

(12) **EUROPÄISCHE PATENTSCHRIFT**

(45) Veröffentlichungstag und Bekanntmachung des Hinweises auf die Patenterteilung:
**14.10.2015 Patentblatt 2015/42**

(21) Anmeldenummer: **12794982.4**

(22) Anmeldetag: **05.12.2012**

(51) Int Cl.:
*C08F 2/22* *(2006.01)* *C08F 265/00* *(2006.01)*
*C08F 291/12* *(2006.01)* *C08L 33/04* *(2006.01)*
*C08L 35/00* *(2006.01)* *C09D 133/00* *(2006.01)*

(86) Internationale Anmeldenummer:
**PCT/EP2012/074392**

(87) Internationale Veröffentlichungsnummer:
**WO 2013/087461 (20.06.2013 Gazette 2013/25)**

(54) **VERWENDUNG WÄSSRIGER POLYMERISATDISPERSIONEN ZUR VERBESSERUNG DER RESISTENZ GEGENÜBER CHEMISCHEN EINFLÜSSEN**

USE OF AQUEOUS POLYMER DISPERSIONS FOR IMPROVING RESISTANCE TO CHEMICAL INFLUENCES

UTILISATION DE DISPERSIONS POLYMÈRES AQUEUSES POUR AMÉLIORER LA RÉSISTANCE AUX AGRESSIONS CHIMIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2011 EP 11193689**

(43) Veröffentlichungstag der Anmeldung:
**22.10.2014 Patentblatt 2014/43**

(73) Patentinhaber: **BASF SE**
**67056 Ludwigshafen (DE)**

(72) Erfinder:
• **ROLLER, Sebastian**
**68167 Mannheim (DE)**

• **DERSCH, Rolf**
**67434 Neustadt (DE)**
• **DITTRICH, Uwe**
**67125 Dannstadt-Schauernheim (DE)**
• **BALK, Roelof**
**67459 Böhl-Iggelheim (DE)**
• **LOHMEIJIER, Bastiaan**
**68199 Mannheim (DE)**
• **TROMSDORF, Ulrich**
**68723 Plankstadt (DE)**

(56) Entgegenhaltungen:
**EP-A2- 0 288 763     US-A1- 2006 047 065**

## EP 2 791 180 B1

**Beschreibung**

Vorliegende Erfindung betrifft die Verwendung einer wässrigen Polymerisatdispersion, dadurch erhältlich, dass man eine Zusammensetzung 1 von wenigstens eine ethylenisch ungesättigte Gruppe aufweisenden Verbindungen (Monomeren) nach der Methode der radikalischen wässrigen Emulsionspolymerisation bis zu einem Umsatz von wenigstens 90, vorzugsweise wenigstens 95 und besonders bevorzugt wenigstens 98 Gew.-%, bezogen auf die zu polymerisierende Monomerenzusammensetzung 1, polymerisiert (Polymerisationsstufe 1) und daran anschließend im Beisein des Produktgemisches der Polymerisationsstufe 1 eine Zusammensetzung 2 von wenigstens eine ethylenisch ungesättigte Gruppe aufweisenden Verbindungen (Monomeren) nach der Methode der radikalischen wässrigen Emulsionspolymerisation mit der Maßgabe polymerisiert (Polymerisationsstufe 2), dass

a) die Zusammensetzung 1 so beschaffen ist, dass bei alleiniger statistischer Copolymerisation der Zusammensetzung 1 ein Polymerisat 1 erhalten würde, dessen Glasübergangstemperatur $T_{g1} > 0\ °C$, bevorzugt $> 10°C$, insbesondere bevorzugt $> 20\ °C$ beträgt,

b) die Zusammensetzung 2 so beschaffen ist, dass bei alleiniger statistischer Copolymerisation der Zusammensetzung 2 ein Polymerisat 2 erhalten würde, dessen Glasübergangstemperatur $T_{g2} > 80°C$, insbesondere $> 100°C$ beträgt,

c) der Betrag der Differenz zwischen $T_{g1}$ und $T_{g2}$ wenigstens $50°C$ beträgt,

d) zusätzlich zu den Monomeren der Zusammensetzungen 1 und 2 wenigstens ein von diesen Monomeren verschiedenes, wenigstens eine ethylenisch ungesättigte Gruppe und das Element Stickstoff enthaltendes Haftmonomeres in einer Menge von 0,1 bis 10 Gew.-%, vorzugsweise 0,5 bis 5 Gew.-%, insbesonders bevorzugt 1 bis 3 Gew.-%, bezogen auf die Gesamtmenge der zu polymerisierenden Monomeren, einpolymerisiert wird,

e) von der Gesamtmenge der gemäß d) einzupolymerisierenden Haftmonomeren 20 bis 100 mol-% in der Polymerisationsstufe 1 mit einpolymerisiert werden und

f) die Menge derjenigen Zusammensetzung i, der der tiefere Grenzwert $T_{gi}$ zuzuordnen ist, bezogen auf die Gesamtmenge der Zusammensetzungen 1 und 2, 60 bis 90 Gew.-%, bevorzugt 70 bis 85 Gew.-% beträgt,

g) sowie zusätzlich zu den Monomeren der Zusammensetzungen 1 und 2 wenigstens ein von diesen Monomeren verschiedenes Monomer, ausgewählt aus der Gruppe Itakonsäure, Acetoacetoxyethyl(meth)acrylat (AAEM), Acrylnitril in einer Menge von 0,2 bis 25 Gew.-%, bezogen auf die Gesamtmenge der zu polymerisierenden Monomeren, vorzugsweise in der Polymerisationsstufe 1, einpolymerisiert wird

für Beschichtungszusammensetzungen mit verbesserter Resistenz gegenüber chemischen Einflüssen, insbesondere mit verbesserter Handcremeresistenz.

Ferner betrifft vorliegende Erfindung Beschichtungszusammensetzungen enthaltend die wässrigen Polymerisatdispersionen mit verbesserter Resistenz gegenüber Chemikalien, insbesondere mit verbesserter Handcremeresistenz.

Wässrige Polymerisatdispersionen sind fluide Systeme, die als disperse Phase in wässrigem Dispergiermedium Polymerisatteilchen in stabiler disperser Verteilung befindlich enthalten. Der Durchmesser der Polymerisatteilchen liegt im Allgemeinen hauptsächlich im Bereich von 0,01 bis 5 µm, häufig hauptsächlich im Bereich von 0,01 bis 1 µm.

Ebenso wie Polymerisatlösungen beim Verdampfen des Lösungsmittels weisen wässrige Polymerisatdispersionen beim Verdampfen des wässrigen Dispergiermediums die Fähigkeit auf, transparente Polymerisatfilme zu bilden, weshalb wässrige Polymerisatdispersionen in vielfacher Weise als Bindemittel, z.B. für Anstrichfarben oder Massen zum Beschichten von Leder, Anwendung finden.

Ob eine wässrige Polymerisatdispersion nach Verdampfen des Wassers einen zusammenhängenden transparenten Film bildet oder eine spröde, trübe pulverisierbare Schicht entsteht, ist jedoch im Unterschied zur Polymerisatlösung abhängig von der Art des dispergierten Polymerisats und von der Temperatur, bei der die Filmbildung erfolgt. Die tiefste Temperatur, bei der gerade noch ein transparenter, nicht rissiger Film gebildet wird, soll nachfolgend als Mindest-Filmbilde-Temperatur (MFT) der betreffenden wässrigen Polymerisatdispersion bezeichnet werden. Unterhalb der MFT erhält man keine Filmbildung (vgl. Ullmanns Enzyklopädie der technischen Chemie, Bd. 19, 4. Auflage, Verlag Chemie, Weinheim (1980), S. 17).

Zweistufenacrylatdispersionen, die Blockfestigkeit in Kombination mit akzeptabler Verfilmung zeigen, sind bekannt (EP 710 680).

Eine verbesserte Resistenz gegenüber Chemikalien beispielsweise verbesserter Handcremeresistenz dieser Dispersionen wird jedoch nicht beschrieben.

Handläufe an Treppen, Türen, lackierte Truhen oder andere Einrichtungsgegenstände können ein dekoratives Element jeder Wohnung sein. Nach längerem Gebrauch zeichnen sich jedoch visuell leicht wahrnehmbare Unterschiede zwischen den Stellen eines Geländers oder eines Holzdeckels ab, die bei der täglichen Nutzung mit der Hand berührt werden und solchen Teilen des Einrichtungsstückes, zu dem kein Kontakt bestanden hat. Die oft berührten Flächen glänzen, sind oft "speckig" oder verschmutzt, teilweise ist der Lack mechanisch abgetragen. Ursache ist in der Regel, dass Handcreme, Handschweiß und Körperfett an den häufig berührten Oberflächen den Lack aufweichen und dieser somit zur Verschmutzung neigt. Hier werden Lösungen benötigt, die gegenüber Angriffen von Fett und Schmutz resistenter als bekannte Systeme sind. Klassische Acrylatlacke sind hier ungeeignet, da deren fett- und Handschweißbeständigkeit nicht optimal sind.

Lösungsmittelhaltige Alkydlacke, zumeist mit Schwermetalsikkativen, sind zwar technisch gesehen oft eine Alternative, gehören aber keiner zukunftsträchtigen, umweltschonenden Technologie an. Polyurethansysteme haben ihre Vorteile meist in oberflächen-mechanischen Aspekten. In Einzelfällen wird eine bessere Fettbeständigkeit beschrieben, die hohen Kosten der Rohstoffklasse setzen ihrem Gebrauch aber Grenzen.
Ökonomisch akzeptable Acrylatsysteme mit den geforderten Gebrauchseigenschaften können die Lücken in der Rohstoffauswahl schließen.

Die WO 98/35994 beschreibt Emulsionspolymere für Anstrich- und Beschichtungsanwendungen mit einer Kombination aus Block-, Wasser- und Ethanolresistenz. Die Polymere basieren auf einer Monomermischung enthaltend ein Monomer mit einer hochpolaren Gruppe (mindestens 0,5% bez. auf Masse aller Monomere carboxylierte sowie mindestens 0,8% bez. auf Masse aller Monomere sulfonierte Monomere, vgl. Anspruch 1), ein Monomer mit einer hydrolysierbaren Silicium-enthaltenden Einheit sowie einem nichtfunktionellen Monomer. Falls weniger als 1,5% bezogen auf Masse aller Monomere des Silicium-enthaltenden Monomeren verwendet werden, enthält das Polymer zusätzlich mindestens 0,1% eines mindestens zweifach ungesättigten Vernetzers. Die Emulsionspolymere können zweistufig hergestellt werden, wobei die erste Stufe eine Glasübergangstemperatur von < 25 °C und die zweite Stufe eine Glasübergangstemperatur von > 60 °C aufweisen. Die Systeme führen zu einer guten Früh- und Endblockfestigkeit ohne dabei an Wasser- und Lösemittelresistenz einzubüßen, und führen zu Beschichtungen mit adäquater bis exzellenter Resistenz gegenüber Wasser und Ethanol/Wasser-Mischungen.

Die US 2005/0256257 beschreibt wässrige Polymerdispersionen, die durch Polymerisation einer Mischung von Monomeren erhalten werden können, die ein nichtionisches, ein carboxyfunktionelles sowie ein phosphorhaltiges Monomer enthalten. Darüber hinaus können silanhaltige Monomere, carbonylfunktionelle bzw. aldehydreaktive funktionelle Gruppen tragende Monomere, OH- oder aminfunktionelle Monomere verwendet werden. Die enthaltenen Bindemittel werden für Beschichtungen für Metall bzw. Plastik verwendet, insbesondere als Korrosionsschutz für Metallsubstrate.

Die WO 2004/003074 beschreibt Dual Cure Emulsionen bestehend aus einem dispergierten Polymer enthaltend acetoacetoxy-artige funktionelle Gruppen mit einer Glasübergangstemperatur von 0-100 °C sowie einem multifunktionellen Acrylat. Des Weiteren enthält die wässrige Zusammensetzung eine flüchtige Base in derartiger Menge, dass die acetoacetoxy-artigen funktionellen Gruppen in die entsprechenden Enamine überführt werden. Die erfindungsgemäßen Beschichtungen zeigen nach UV-Härtung eine verbesserte Handcremeresistenz gegenüber einer Vergleichsbeschichtung basierend auf einem acetoacetoxyfreien dispergierten Polymer.

Die WO 2005/058993 beschreibt eine rezyklierbare Beschichtungszusammensetzung enthaltend ein Polyurethanpolymer sowie zwei unterschiedlich definierte Vinylpolymere.

Die EP 1 418 192 beschreibt nichtwässrig gelöste, wasserdispergierbare Polyurethanharze mit hohem Carbonatgruppengehalt. Die Lacke auf Basis des erfindungsgemäßen wasserverdünnbaren OH-Gruppen enthaltenden Polyurethanharzes weisen in Kombination mit Polyurethan-Dispersionen eine signifikant bessere Suntan-Lotion-Beständigkeit auf, im Vergleich zu der Verwendung der nicht erfindungsgemäßen Bindemittel.

Die DE 3630356 beschreibt Kunstharz-überzogene Metallpigmente, in denen die Metallteilchen mit einem Kunstharz überzogen sind, für die Verwendung in Metallanstrichmitteln. Die Kunstharzvariationen auf einem mindestens dreifach ethylenisch ungesättigtes Monomeres basieren zeigen Vorteile hinsichtlich der Beständigkeit gegenüber Kosmetika sowie gegenüber Fingerabdrücken.

Keine der zitierten Schriften lehrt einen Weg zur Verbesserung der Resistenz gegenüber Chemikalien, insbesondere der Handcremeresistenz. Es wird ebenso kein Zusammenhang zwischen Glasübergangstemperatur, Schalenverhältnis, Monomeren etc. und der Handcremebeständigkeit hergestellt.

Aufgabe der vorliegenden Erfindung war es daher, wässrige Polymerisatdispersionen zur Verfügung zu stellen, die eine verbesserte Resistenz gegenüber Chemikalien, insbesondere mit verbesserter Handcremeresistenz gegenüber wässrigen Polymerisatdispersionen des Standes der Technik aufweisen.

Demgemäß wurden die Verwendung der eingangs definierten wässrigen Polymerisatdispersionen gefunden, die gegenüber den bereits bekannten Polymerdispersionen des Standes der Technik in überraschender Weise eine verbesserte Resistenz gegenüber Chemikalien, insbesondere verbesserter Handcremresistenz in Beschichtungen, insbesondere in wässrigen Seidenglanzlacken aufzeigen.

Vorteilhaft verwendet werden solche erfindungsgemäßen wässrigen Polymerisatdispersionen, bei denen die Menge derjenigen Monomerenzusammensetzung i, der der tiefere Grenzwerte Tgi zuzuordnen ist, bezogen auf die Gesamtmenge der Zusammensetzungen 1 und 2, 60 bis 90, bevorzugt 70 bis 85 beträgt. Der Betrag der Differenz zwischen Tg1 und Tg2 beträgt wenigstens 50°C. In anwendungstechnisch zweckmäßiger Weise beträgt der Differenzbetrag zwischen Tg1 und Tg2 60 bis 120°C oder 40 bis 80°C.

Ferner ist es günstig, wenn der tiefere Grenzwert Tgi im Bereich >0 bis > 20°C liegt.

In entsprechender Weise erweist es sich als günstig, wenn der höhergelegene der beiden Grenzwerte Tgi im Bereich > 80 °C, vorzugsweise > 100°C liegt.

Bei vorgegebenem Tgi für die Monomerenzusammensetzung i läßt sich die Monomerenzusammensetzung i in einfacher Weise mittels der Gleichung nach Fox zusammenstellen. Nach Fox (T.G. Fox, Bull. Am. Phys. Soc. (Ser. II) 1, 123 (1956) und Ullmanns Enzyklopädie der technischen Chemie, Verlag Chemie, Weinheim, 1980, Bd. 19, 4. Auflage, S. 18) gilt für die Glasübergangstemperatur von statistischen Mischpolymerisaten in guter Näherung

$$1/T_g = x^1/T_g^1 + x^2/T_g^2 + \ldots x^n/T_g^n,$$

wobei $x^1$, $x^2$, $\ldots$ $x^n$ die Massenbrüche der Monomeren 1, 2, $\ldots$ n und $T_g^1$, $T_g^2$, $\ldots$ $T_g^n$ die Glasübergangstemperaturen der jeweils nur aus einem der Monomeren 1, 2, $\ldots$ n aufgebauten Polymerisaten in Grad Kelvin bedeuten.

Experimentell lässt sich eine statistische Copolymerisation einer Monomerenzusammensetzung i im wesentlichen dadurch realisieren, dass man ein ihr entsprechendes Monomerengemisch nach dem Zulaufverfahren der Methode der radikalischen wässrigen Emulsionspolymerisation polymerisiert, d.h. man emulgiert das Monomerengemisch in wässriger Phase vor und lässt es nach Maßgabe des Verbrauchs dem Polymerisationsgefäß unter Zusatz von Initiatoren so zulaufen, dass der Polymerisationsumsatz der bereits im Polymerisationsgefäß befindlichen Monomeren > 99 Gew.-% beträgt. Als Initiatoren eignen sich vorzugsweise Natriumperoxodisulfat und die Polymerisationstemperatur liegt normalerweise bei 60 bis 90°C. Der Polymerisationsdruck kann je nach Monomeren > 1 atm betragen. Als Dispergiermittel können die in dieser Schrift zur Herstellung der erfindungsgemäßen wässrigen Polymerisatdispersionen empfohlenen Substanzen angewendet werden. Das Molekulargewicht lässt sich in an sich bekannter Weise durch Mitverwendung von das Molekulargewicht regelnden Substanzen (z.B. Mercaptan) und/oder die verwendete Initiatormengen einstellen. In Abwesenheit von das Molekulargewicht regelnden Substanzen und Verwendung von 0,1 bis 2 Gew.-%, bezogen auf die Monomerenmenge, an Polymerisationsinitiator, lässt sich eine wässrige Polymerisatdispersion erhalten, deren Glasübergangstemperatur dem Grenz-Tg entspricht.

Unter den erfindungsgemäßen wässrigen Polymerisatdispersionen sind diejenigen bevorzugt, bei denen die Polymerisationsstufe 1 diejenige Monomerenzusammensetzung betrifft, der der tiefere Grenzwert Tgi zuzuordnen ist, d.h. erfindungsgemäß wird die Stufenabfolge weich/hart bevorzugt.

Zum Aufbau der Monomerenzusammensetzungen 1 und 2 kommen insbesondere monoethylenisch ungesättigte radikalisch polymerisierbare Monomere wie Styrol, $\alpha$-Methylstyrol, o-Chlorstyrol oder Vinyltoluole, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methacrylsäuremethyl-, -ethyl-, -n-butyl-, -iso-butyl-, tert.-butyl-, norbornyl-, isobornyl- und -2-ethylhexylester, Maleinsäuredimethylester oder Maleinsäure-n-butylester, Nitrile $\alpha,\beta$ - monoethylenisch ungesättigter Carbonsäuren wie Acrylnitril und Methacrylnitril sowie C4-8-konjugierte Diene wie 1,3-Butadien und Isopren in Betracht. Von Bedeutung sind auch im Handel befindliche Monomere VEOVA® 9-11 (VEOVA X ist ein Handelsname der Firma Shell und steht für Vinylester (von Carbonsäuren, die auch als Versatic® X-Säuren bezeichnet werden).

Aus den vorgenannten Monomeren rekrutiert sich in der Regel der Hauptanteil der Monomerenzusammensetzungen 1 und 2, der, bezogen auf die jeweilige Monomerenzusammensetzung, einen Anteil von mehr als 50 Gew.-% auf sich vereint. Monomere, die für sich polymerisiert üblicherweise Homopolymerisate ergeben, die eine erhöhte Wasserlöslichkeit aufweisen, sind in beiden Monomerenzusammensetzungen im Normalfall lediglich in modifizierenden Mengen enthalten. Bezogen auf die Gesamtmenge der jeweiligen Monomerenzusammensetzung sind das normalerweise weniger als 50 Gew.-%, in der Regel weniger als 20 Gew.-%, vorzugsweise 0,1 bis 10 Gew.-%, häufig auch 0,1 bis 5 Gew.-%. Beispiele für derartige Monomere sind 3 bis 6 C-Atome aufweisende $\alpha,\beta$-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure, Acrylamidopropansulfonsäure und wasserlösliche Salze der vorgenannten Säuren.

Vorzugsweise enthält sowohl die Monomerenzusammensetzung 1 als auch die Monomerenzusammensetzung 2 0,1 bis 5 Gew.-%, bezogen auf die jeweilige Monomerenzusammensetzung i, an den vorgenannten modifizierenden Monomeren, deren Homopolymerisate eine erhöhte Wasserlöslichkeit aufweisen.

Ganz besonders bevorzugt enthält die Monomerenzusammensetzung 1 Itakonsäure und/oder Acetoacetoxyethylmethacrylat (AAEM) und/oder Acrylnitril.

Neben den bereits aufgeführten Monomeren können die Monomerenzusammensetzungen 1 und 2 in untergeordneten Mengen, in der Regel 0,01 bis 5 Gew.-%, bezogen auf die jeweilige Monomerenzusammensetzung i, an solchen Monomeren umfassen, die innerhalb der individuellen dispergierten Polymerisatpartikel eine Vernetzung der Polymerketten bewirken. Besonders geeignet sind diesbezüglich zwei oder mehr nicht konjugierte ethylenisch ungesättigte Gruppen aufweisende Monomere wie z.B. die Di-Ester zweiwertiger Alkohole mit $\alpha,\beta$-monoethylenisch ungesättigten Monocarbonsäuren, unter denen wiederum die Acryl- und Methacrylsäureester vorzugsweise eingesetzt werden. Beispielhaft aufgeführt seien Alkylenglykoldiacrylate- und dimethyacrylate wie Ethylenglykoldiacrylat, 1,3-Butylenglykoldiacrylat, 1,4-Butylenglykoldiacrylat sowie Propylenglykoldiacrylat. Ferner eignen sich Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. Selbstverständlich können sowohl die Monomerenzusammensetzung 1 und die Monomerenzusammensetzung 2 gleichzeitig solche vorvernetzenden Monomeren umfassen. Manchmal ist es aber auch günstig, wenn nur eine der beiden Monomerenzusammensetzungen solche Vorvernetzer enthält. Häufig sind sie nur Bestandteil der ersten oder der zweiten Polymerisiationsstufe. Zweckmäßig ist insbesondere ihre ausschließliche Verwendung in der harten Polymerisationsstufe. Sie können aber auch nur in der weichen Polymerisationsstufe befindlich angewendet werden.

Vielfach ist es günstig, wenn wenigstens eine der beiden Monomerenzusammensetzungen 1, 2 oder auch beide in untergeordneten Mengen, üblicherweise 0,5 bis 5 Gew.-%, bezogen auf die jeweilige Monomerenzusammensetzung i, solche Monomeren umfassen, die erst während der Filmbildung eine Vernetzung bedingen.

Beispielhaft genannt seien Carbonylgruppen aufweisende Monomere wie Acrolein, Methacrolein, Diacetonacrylamid und -methacrylamid sowie Acetessigsäurevinylester. Vorgenannte Monomere bewirken z.B. dann eine Nachvernetzung, wenn die wäßrige Polymerisatdispersion gleichzeitig eine entsprechende Menge einer Polyaminverbindung zugesetzt enthält. Als solche eignen sich insbesondere die Dihydrazide von 2 bis 10 C-Atome aufweisenden aliphatischen Dicarbonsäuren. Beispiele hierfür sind Oxalsäuredihydrazid, Malonsäuredihydrazid, Bernsteinsäuredihydrazid, Glutarsäuredihydrazid, Adipinsäuredihydrazid oder Sebacinsäuredihydrazid.

Ein anderes Nachvernetzung bedingendes Monomer ist z.B. 2-Acetoacetoxyethylmethacrylat (alleine bzw. in Kombination mit Polyaminen oder Polyaldehyden wie Glyoxal).

Des weiteren eignen sich zur Nachvernetzung solche Polymerisatbausteine, die hydrolysierbare Si-organische Bindungen aufweisen. Beispielhaft genannt seien die copolymerisierbaren Monomeren Methacryloxypropyltrimethoxysilan und Vinyltrimethoxysilan. Weitere geeignete Polymerbausteine entsprechender Art finden sich in der DE-A 43 41 260. Weisen die dispergierten Polymerisatpartikel Carboxylgruppen auf, lässt sich eine Nachvernetzung auch durch Zusatz von mehrwertigen Kationen aufweisenden Metallsalze bewirken (z.B. Mg-, Ca-, Zn- oder Zr-Salze).

Auch eignen sich Epoxy-, Hydroxy- und/oder N-Alkylolgruppen aufweisende Monomere wie z.B. Glycidylacrylat, N-Methylolacrylamid und -methacrylamid und Monoester aus zweiwertigen Alkoholen und 3 bis 6 C-Atome aufweisenden $\alpha,\beta$-monoethylenisch ungesättigten Carbonsäuren wie n-Hydroxyethyl-, n-Hydroxypropyl- oder n-Hydroxybutylacrylat und -methacrylat zum Zweck der Nachvernetzung.

Umfassen die erfindungsgemäßen wässrigen Polymerisatdispersionen Vorvernetzung- und/oder Nachvernetzung bewirkende Systeme, so sind mit den den Monomerenzusammensetzungen 1 und 2 definitionsgemäß zuzuordnenden Glasübergangstemperaturen Tg1 und Tg2 die unter Ausschluss dieser lediglich in untergeordneten Mengen enthaltenen Vernetzungsbestandteile zu ermittelnden Glasübergangstemperaturen gemeint. In der Regel wirken sich Vor- und/oder Nachvernetzung vorteilhaft auf die Anfangs- (unmittelbar nach Verfilmung) und Endblocktemperatur (nach mehreren Tagen) aus.

Vorzugsweise rekrutieren sich die Monomerenzusammensetzungen 1 und 2 in der vorstehend beschriebenen Weise aus der Gruppe der nachfolgenden Monomeren:

n-Butylacrylat, 2-Ethylhexylacrylat, Ethylacrylat, Methylmethacrylat, n-Butylmethacrylat, Styrol, Acrylnitril, Acrylsäure, Methacrylsäure, Acrylamid, Methacrylamid, n-Hydroxyethylacrylat, n-Hydroxyethylmethacrylat, n-Hydroxypropylacrylat, n-Hydroxypropylmethacrylat, Acrylamidopropansulfonsäure sowie Vinylsulfonsäure und deren Alkalimetallsalze,
N-(2-Acryloxyethyl)imidazolidin-2-on, N-(2-Methacryloxyethyl)imidazolidin-2-on.
(2-Ureidomethacrylat, UMA), Itakonsäure und Acetoacetoxyethylmethacrylat (AAEM).

Besonders bevorzugt rekrutieren sich die Monomerenzusammensetzungen 1 und 2 in der vorstehend beschriebenen Weise aus der Gruppe der nachfolgenden Monomeren:

n-Butylacrylat, 2-Ethylhexylacrylat, Methylmethacrylat, n-Butylmethacrylat, Acrylsäure, Methacrylsäure, Acrylnitril, Acrylamid, Methacrylamid, N-(2-Acryloxyethyl)imidazolidin-2-on, N-(2-Methacryloxyethyl)imidazolidin-2-on. (2-Ureidomethacrylat, UMA), Itakonsäure und Acetoacetoxyethylmethacrylat (AAEM).

Insgesamt erweist es sich als günstig, wenn einerseits die Monomerenzusammensetzung i mit dem tieferen Tgi-Wert, bezogen auf die Monomerenzusammensetzung i, 10 bis 50 Gew.-% an solchen Monomeren umfasst, deren Homopolymerisate Tg-Werte oberhalb des tieferen Tgi aufweisen und andererseits die Monomerenzusammensetzung i mit dem höheren Tgi-Wert in gleicher Weise bezogen gleichzeitig 0 bis 25 Gew.-% an solchen Monomeren umfasst, deren Homopolymerisate Tg-Werte unterhalb des höheren Tgi aufweisen. Generell sind solche erfindungsgemäßen wässrigen Polymerisatdispersionen von Vorteil, deren MFT ohne Zusatz von Filmbildehilfsmittel < 30°C, vorzugsweise < 10°C, beträgt.

Als Stickstoff enthaltende Haftmonomere kommen insbesondere radikalisch polymerisierbare Monomere mit wenigstens einer Amino-, Ureido- oder N-heterocyclischen Gruppe in Betracht.

Eine Vielzahl solcher geeigneter Haftmonomeren findet man in der EP-B 421 185, in der EP-B 379 892 auf Seite 3, in der EP-A 609 756 auf Seite 2, in der DE-A 43 34 178, in der DE-A 39 02 067 auf Seiten 3/4 und den in diesen Schriften zitierten Referenzen.

Beispielhaft genannt seien Aminoethylacrylat und -methacrylat, Dimethylaminoethylacrylat und -methacrylat, Diethylaminoethylacrylat und -methacrylat, Dimethylaminopropylacrylat und -methacrylat, 3-Dimethylamino-2,2-dimethylpropyl-1-acrylat und -methacrylat, 2-N-Morpholinoethylacrylat und -methacrylat, 2-N-Piperidinoethylacrylat und -methacrylat, N-(3-Dimethylaminopropyl)acrylamid und -methacrylamid, N-Dimethylaminoethylacrylamid und -methacrylamid, N-Diethylaminoethylacrylamid und -methacrylamid, N-(4-Morpholinomethyl)acrylamid und -methacrylamid, Vinylimidazol sowie monoethylenisch ungesättigte Derivate des Ethylenharnstoffs wie N-(2-Acryloyloxyethyl)-ethylenharnstoff, N-(b-Acrylamidoethyl)-ethylenharnstoff, N-2-(Allylcarbamato)aminoethylimidazolidinon (WAM IV der Fa. Air Products and Chemicals), N-(3-allyloxy-2-hydroxypropyl)aminoethylethylenharnstoff (Sipomer® WAM der Fa. Alcolac), N-Vinylethylenharnstoff, N-Vinyloxyethylethylenharnstoff, N-Methacryloxyacetoxyethylethylenharnstoff, N-(Acrylamidomethylen)ethylenharnstoff, N-(Methacrylamidomethylen)ethylenharnstoff sowie die besonders bevorzugten N-(2-Methacryloyloxyethyl)ethylenharnstoff [1-(2-Methacryloyloxyethyl)imidazolin-2-on Ureido-ethylmethacrylat Ethylenharnstoffethylmethacrylat (Plex® 6844-0 der Fa. Röhm GmbH) und N-(Methacrylamidoethyl)ethylenharnstoff N-(b-Methacrylamidoethyl)ethylenharnstoff (Sipomer WAM II der Fa. Rhône-Poulenc). Weitere besonders geeignete Ureidmonomere sind in einem Übersichtsartikel von R.W. Kreis, A.M. Sherman, Developments in "Ureido Functional Monomer for Promoting Wet Adhesion in Latex Paints, Water-Borne and Higher Solids Coating Symposium vom 03. bis 05.02.1988, New Orleans, Louisiana" genannt.

Vorzugsweise werden 30 bis 100 mol-%, oder 40 bis 100 mol-% beziehungsweise 50 bis 100 mol-% der definitionsgemäß einzupolymerisierenden, das Element Stickstoff enthaltenden, Haftmonomeren in der Polymerisationsstufe 1 einpolymerisiert. Hinsichtlich einer optimalen Balance aller gewünschten Eigenschaften besonders vorteilhafte erfindungsgemäße wässrige Polymerisatdispersionen werden dann erhalten, wenn in der Polymerisationsstufe 1 40 bis 60 mol-% der definitionsgemäß insgesamt einzupolymerisierenden Haftmonomeren copolymerisiert werden.

Vorzugsweise werden die erfindungsgemäßen wässrigen Polymerisatdispersionen mit einem Feststoffgehalt > 40, mit Vorteil > 50 Gew.-%, bezogen auf die gesamte wässrige Polymerisatdispersion, hergestellt. Regelmäßig wird der Feststoffgehalt anwendungstechnisch zweckmäßig 40 bis 70 Gew.-% betragen.

Hinsichtlich der gewünschten anwendungstechnischen Eigenschaften ist es günstig, wenn der gewichtsmittlere Durchmesser der dispergierten Polymerisatteilchen im Bereich von 40 bis 300 nm liegt. Besonders günstige gewichtsmittlere Polymerisatteilchendurchmesser betragen 50 bis 200 nm bzw. 50 bis 150 nm. Spielt die dynamische Viskosität der erfindungsgemäßen wässrigen Polymerisatdispersion nicht die entscheidungswesentliche Rolle, ist die Verteilung der Polymerisatteilchendurchmesser vorzugsweise eng. Die Uneinheitlichkeit der Polymerisatteilchendurchmesserverteilung sollte unter 5, bevorzugt unter 2 liegen. Sie ergibt sich als Verhältnis von gewichtsmittlerem zu zahlenmittlerem Polymerisatteilchendurchmesser.

Die Herstellung der erfindungsgemäßen wässrigen Polymerisatdispersionen erfolgt gemäß der eingangs gegebenen "product by process" Definition des erfindungsgemäßen Gegenstandes, d.h. nach der Methode der radikalischen wässrigen Emulsionspolymerisation im Beisein von Dispergiermitteln und radikalischen Polymerisationsinitiatoren.

Das Verhältnis der Wasserphase zur Gesamtmenge der in beiden Stufen verwendeten Monomeren wird dabei entsprechend dem gewünschten Feststoffgehalt der herzustellenden wässrigen Polymerisatdispersion gewählt.

Die Monomerenzusammensetzung 1 kann dabei als ein derselben entsprechendes Monomerengemisch in Form einer wässrigen Monomerenemulsion insgesamt ins Polymerisationsgefäß vorgelegt oder diesem teilweise oder ganz im Verlauf der Polymerisationsstufe 1 in wässrigem Medium emulgierter oder in wasserfreier Form zudosiert werden. Natürlich kann die Monomerenzusammensetzung 1 auch nur bei integraler Betrachtung über die gesamte Polymerisationsstufe 1 realisiert werden. In diesem Fall wird dem Polymerisationsgefäß eine sich in ihrer Zusammensetzung zeitlich ändernde Monomerenmischung zugegeben, deren Zusammensetzung lediglich bei integraler Betrachtung der Monomerzusammensetzung 1 entspricht. Diese letztere Verfahrensweise ist weniger bevorzugt. Nach Beendigung der Polymerisationsstufe 1 kann die Monomerenzusammensetzung 2 in entsprechender Weise dem Polymerisationsgefäß auf einmal zugesetzt oder teilweise oder ganz im Verlauf der Polymerisationsstufe 2 in wässrigem Medium emulgierter oder in wasserfreier Form zudosiert werden. Die erfindungsgemäß einzupolymerisierenden Haftmonomeren werden vorzugsweise in die übrigen Monomeren bzw. deren Emulsionen eingemischt ins Polymerisationsgefäß gegeben. Vorzugsweise werden somit in beiden Polymerisationsstufen dem Polymerisationsgefäß über die jeweilige Polymerisationsstufe in ihrer Zusammensetzung zeitlich konstante Monomerengemische zugeführt. Letzteres erfolgt mit Vorteil so, dass der Polymerisationsumsatz der bereits ins Polymerisationsgefäß zugeführten Monomeren zu jedem Zeitpunkt nach Beginn der Polymerisation > 90 Gew.-%, vorzugsweise > 95 Gew.-% und besonders bevorzugt > 98 Gew.-% beträgt.

In beiden Stufen wird die Polymerisation durch übliche radikalische Initiatoren ausgelöst. Als solche kommen alle diejenigen in Betracht, die in der Lage sind, eine radikalische wässrige Emulsionspolymerisation auszulösen. Es kann sich dabei sowohl um Peroxide, z.B. um Alkalimetall- bzw. Ammoniumperoxodisulfat, als auch um Azoverbindungen wie Azo-bisisobutyronitril oder 4,4'-Azo-bis-cyanvaleriansäure handeln. Mit Vorteil werden auch kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure und ganz besonders bevorzugt kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, eingesetzt, wobei anstelle von Ascorbinsäure auch häufig das Natriummetallsalz der Hydroxymethansulfinsäure, Natriumsulfit oder Natriumhydrogensulfit und anstelle von Wasserstoffperoxid häufig Alkalimetallperoxodisulfate und/oder Ammoniumperoxodisulfat angewendet werden. Anstelle eines wasserlöslichen Eisen(II)-salzes wird häufig auch ein V-Salz oder eine Kombination aus wasserlöslichen Fe/V-Salzen benutzt. Vorzugsweise beträgt die Menge der eingesetzten radikalischen Initiatorsysteme, bezogen auf die Gesamtmenge der zu polymerisierenden Monomeren, 0,1 bis 2 Gew.-%. Die Polymerisationsinitiatoren können in dem Fachmann an sich bekannter Weise in Abhängigkeit von ihrer Art auf einmal ins Polymerisationsgefäß vorgelegt oder diesem nach Maßgabe ihres Verbrauchs, d.h. gemäß Polymerisationsfortschritt, kontinuierlich zugegeben werden.

Polymerisationsdruck und Polymerisationstemperatur sind von eher untergeordneter Bedeutung. Im Allgemeinen arbeitet man in beiden Polymerisationsstufen bei Temperaturen zwischen Raumtemperatur und 100°C, vorzugsweise 50 bis 95°C und besonders bevorzugt 60 bis 90°C. Die Anwendung von vermindertem oder erhöhtem Druck ist möglich, so dass die Polymerisationstemperatur auch 100°C überschreiten und bis zu 130°C und mehr betragen kann. Vorzugsweise werden leichtflüchtige Monomere wie Ethylen oder Butadien unter erhöhtem Druck polymerisiert. Zur pH-Wert Regulierung des Polymerisationsmediums werden während der erfindungsgemäßen radikalischen wässrigen Emulsionspolymerisation vorzugsweise pH-Puffer wie $NaHCO_3$, $Na_2CO_3$, Na-Acetat oder $Na_2P_2O_5$ zugesetzt. Mit Vorteil werden die pH-Puffer in die zuzuführenden wässrigen Monomerenemulsionen eingearbeitet. Vorzugsweise wird auf pH 3 bis 6 gepuffert. Diese Maßnahme bedingt erhöhte Koagulat- und Stippen-(Mikrokoagulat)-Freiheit der erfindungsgemäßen wässrigen Polymerisatdispersionen. Alternativ zum Einsatz von Puffern kann die zuzuführende wässrige Monomerenemulsion auch mittels einer starken Base (z.B. NaOH) auf pH 3 bis 6 teilneutralisiert zugeführt werden. Der gebrauchsfertige EndpH-Wert der erfindungsgemäßen wässrigen Polymerisatdispersionen wird in der Regel durch Zusatz von Basen wie Ammoniak, Alkalihydroxid (NaOH, KOH), Alkalioxid, Erdalkalioxid, Erdalkalihydroxid (Ca(OH)2), ZnO, Metallcarbonate, -hydrogencarbonate oder Amine wie 2-Amino-2-methyl-1-propanol, Ethanolamin, Diethanolamin, Triethylamin, Morpholin, N,N-Dimethylethanolamin oder 2-Dimethylamino-2-methyl-1-propanol auf Werte oberhalb von 7, vorzugsweise bis 9, erhöht.

Zur Verbesserung der Reproduzierbarkeit und Einstellung definierter Teilchendurchmesser werden Polymerisatteilchenbildungsphase und Polymerisatteilchenwachstumsphase zweckmäßig dadurch in dem Fachmann an sich bekannter Weise voneinander entkoppelt, dass man ins Polymerisationsgefäß eine definierte Menge einer vorgebildeten wässrigen Polymerisatdispersion (einen Saatlatex) vorlegt oder in selbigem eine solche in situ vorbildet. Die im weiteren Verlauf der radikalischen wässrigen Emulsionspolymerisation zugesetzte Menge an Dispergiermittel wird dabei in der Regel so bemessen, dass die kritische Micellbildungskonzentration nicht mehr überschritten und so eine Polymerisatteilchenneubildung vermieden wird. Wird eine breite Teilchendurchmesserverteilung zur Erzeugung hochkonzentrierter wässriger erfindungsgemäßer Polymeriatdispersionen angestrebt, wird man in der Regel dem Polymerisationsgefäß in an sich bekannter Weise zusätzlich während der radikalischen wässrigen Emulsionspolymerisation Saatlatex zufügen. Selbstverständlich kann man im Rahmen der erfindungsgemäßen radikalischen wässrigen Emulsionspolymerisation auch das Molekulargewicht regelnde Mittel wie z.B. Mercaptane mitverwenden. Dies erleichtert in der Regel die Filmbildung (niedere MFT) und begünstigt dadurch das Glanzniveau. Häufig erfolgt die Polymerisation jedoch in Abwesenheit derselben. Wie die Verfahren der radikalischen Polymerisation generell, ist das erfindungsgemäße Verfahren dem Fachmann in bekannter Weise sowohl unter Inertgasatmosphäre (z.B. N2, Ar) als auch unter Sauerstoff enthaltender Atmosphäre (z.B. Luft) anwendbar.

Als Dispergiermittel, die insbesondere die Stabilität der erfindungsgemäßen wässrigen Polymerisatdispersion gewährleisten, kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Vorzugsweise werden als Dispergiermittel ausschließlich Emulgatoren eingesetzt, deren relative Molekulargewichte im Unterschied zu den Schutzkolloiden üblicherweise unter 2000, vorzugsweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nicht-ionischen Emulgatoren verträglich. Desgleichen gilt auch für kationische Emulgatoren, während anionische und kationische Emulgatoren meistens miteinander unverträglich sind. Gebräuchliche Emulgatoren sind z.B. ethoxylierte Mono-, Di- und Tri-Alkylphenole (EO-Grad: 3 bis 100, Alkylrest: C4 bis C12), ethoxylierte Fettalkohole (EO-Grad: 3 bis 100, vorzugsweise 6 bis 50, Alkylrest: C6 bis C20), sowie Alkali- und Ammoniumsalze von Alkylsulfaten (Alkylrest: C8 bis C18), von Schwefelsäurehalbestern ethoxylierter Alkanole (EO-Grad: 1 bis 70, insbesondere 2 bis 10, Alkylrest: C10 bis C18) und ethoxylierter Alkylphenole (EO-Grad: 3 bis 100, vorzugsweise 6 bis 50, Alkylrest: C4 bis C18), von Alkylsulfonsäuren (Alkylrest: C10 bis C18) und von Alkylarylsulfonsäuren (Alkylrest: C9 bis C18). Weitere geeignete Emulgatoren wie Sulfobernsteinsäureester finden sich in Houben-Weyl, Methoden der organischen Chemie, Band XIV/1, Makromolekulare Stoffe, Georg-Thieme Verlag, Stuttgart, 1961, Seiten 192 bis 208.

Als anionische Emulgatoren sind ebenfalls Bis(phenylsulfonsäure)ether bzw. deren Alkali- oder Ammoniumsalze, die an einem oder beiden aromatischen Ringen eine $C_4$-$C_{24}$-Alkylgruppe tragen, geeignet. Diese Verbindungen sind allgemein bekannt, z. B. aus der US-A-4,269,749, und im Handel erhältlich, beispielsweise als Dowfax® 2A1 (Dow Chemical Company).

In der Regel beträgt die Menge an eingesetztem Dispergiermittel 0,5 bis 6, vorzugsweise 1 bis 5 und besonders bevorzugt 2 bis 4 Gew.-%, bezogen auf die radikalisch zu polymerisierenden Monomeren.

Unter einer verbesserten Resistenz gegenüber Chemikalien versteht man biespielsweise eine verbesserte Resistenz gegenüber Handcreme, körpereigenen Fetten, Haushaltsreinigern, Alko-holen und anderen Haushaltschemiklaien, insbesondere aber gegennüber Handcreme.

Typisches Einsatzgebiet der erfindungsgemäßen wässrigen Polymerisatdispersionen ist der Bereich wässriger, insbesondere an organischem Lösungsmittel freien Beschichtungs- und Überzugsmittel, wo sich der aus der wässrigen Polymerisatdispersion gebildete Film mit dem Substrat haftend verbindet.

Diesem Bereich zuzuordnen sind insbesondere Anstrichfarben für Innen- und Außenanwendungen im Bauwesen.

Ebenso sind industrielle Überzugsmittel zu nennen, insbesondere soweit bei ihrer Anwendung erhöhte Temperaturen nicht oder nur schwer zu verwirklichen sind. Beispiele solcher Überzüge sind Schlußlacke, Haftgrundierungen und Isolierungen Weiterhin sind die erfindungsgemäßen wässrigen Polymerisatdispersionen zum Verfestigen von flächigen Fasergebilden geeignet. Während für die zuletzt genannten Anwendungen Filme der reinen Kunststoffdispersionen geeignet sind, werden sie für den Beschichtungs- und Anstrichsektor in der Regel pigmentiert und/oder mit Füllstoffen versetzt. Hier können gängige Rezepturen und Formulierungen angewendet werden, wobei stets die Vorteile von tiefer MFT, erhöhtem Glanz und erhöhter Reißdehnung zur Geltung kommen. Zu nennen sind hier insbesondere Lasuren, Lack-, Seidenglanz-, Glanz- und Hochglanzfarben sowie Massen zum Beschichten von Leder. Als besonders geeignete Substrate seien Holz, Leder, Metall, Kunststoff und mineralische Materialien genannt. Auch eignen sich die erfindungsgemäßen Polymerisate als Additiv in mineralischen Bindemitteln, insbesondere solchen auf Basis Zement.

Vor allem bei Anwendungen im Innenbereich ist es erforderlich, dass die erfindungsgemäßen wässrigen Polymerisatdispersionen weitgehend frei von Restmonomeren und organischem Lösungsmittel sind. Dies kann in an sich bekannter Weise z.B. durch destillative Entfernung (insbesondere Wasserdampfdestillation) oder durch Abstreifen mit einem inerten Gas erreicht werden. Selbstverständlich können auch Verfahren der radikalischen Nachpolymerisation angewendet werden (insbesondere unter Einwirkung von Redoxinitiatorsystemen) wie sie z.B. in der DE-A 44 35 423, DE-A 44 19 518 sowie in der DE-A 44 35 422 aufgeführt oder als Stand der Technik zitiert sind.

Die in den erfindungsgemäßen wässrigen Polymerisatdispersionen dispergierten Polymerisate können z.B. durch behutsame Sprühtrocknung, oder durch Koagulation in an sich bekannter Weise und anschließendes Auswaschen, isoliert werden. Soweit sie nicht aus sich heraus in wässrigem Medium direkt redispergierbar sind, lösen sie sich in der Regel in organischen Lösungsmitteln. Diese Lösungen können in wässriges Medium überführt und unter destillativer Entfernung des organischen Lösungsmittels sowie Zusatz an Dispergiermittel in eine stabile disperse Verteilung des Polymerisats im wässrigen Medium transformiert werden.

Die nach dem erfindungsgemäßen Verfahren zugänglichen wässrigen Polymerisatdispersionen weisen Polymerisatteilchen auf, die eine gewichtsmittlere Teilchendurchmesser $D_w$ im Bereich $\geq 10$ und $\leq 500$ nm, bevorzugt $\geq 20$ und $\leq 200$ nm und insbesondere bevorzugt $\geq 20$ nm bis $\leq 150$ nm aufweisen. Die Bestimmung der gewichtmittleren Teilchendurchmesser ist dem Fachmann bekannt und erfolgt beispielsweise über die Methode der dynamischen Lichtstreuung. Als Teilchengröße wird in dieser Schrift der nach der Methode der dynamischen Lichtstreuung ermittelte gewichtsmittlere Durchmesser der Polymerpartikel in der Dispersion (bestimmt gemäß ISO13321 mit einem High Performance Particle Sizer von der Fa. Malvern bei 22 °C und einer Wellenlänge von 633 nm) verstanden.

Die nach dem erfindungsgemäßen Verfahren zugänglichen wässrigen Polymerisatdispersionen mit gewichtsmittleren Teilchendurchmessern $D_w \leq 150$ nm weisen eine überraschend gute Blockfestigkeit auf und eignen sich daher besonders als Bindemittel für die Beschichtung von Untergründen.

Hierbei zeigen sich häufig Vorteile wie geringerer Bedarf an Verdickern zur Einstellung einer bestimmten Viskosität sowie gute und tiefe Einfärbung bei Verwendung von Farbpigmenten.

Die wässrige Polymerdispersion weist üblicherweise einen Feststoffgehalt von 20 bis 70 Gew.-%, vorzugsweise 35 bis 60 Gew.-%, auf.

Die erhaltene wässrige Polymerdispersion kann als solche oder gemischt mit weiteren, in der Regel filmbildenden, Polymeren als Bindemittelzusammensetzung in wässrigen Beschichtungsmitteln, wie Farb- oder Lackmischungen, verwendet werden.

Selbstverständlich können die nach dem erfindungsgemäßen Verfahren zugänglichen erfindungsgemäßen wässrigen Polymerisatdispersionen auch als Komponente bei der Herstellung von Klebstoffen, Dichtmassen, Kunststoffputzen, Papierstreichmassen, Faservliesen, und Beschichtungsmitteln für organische Substrate sowie zur Modifizierung von mineralischen Bindemitteln eingesetzt werden.

Ein weiterer Gegenstand der Erfindung ist ein Beschichtungsmittel in Form einer wässrigen Zusammensetzung, enthaltend

- wenigstens eine erfindungsgemäße Polymerisatdispersion, wie zuvor definiert,
- gegebenenfalls wenigstens einen (an)organischen Füllstoff und/oder wenigstens ein (an)organisches Pigment,
- gegebenenfalls wenigstens ein übliches Hilfsmittel, und
- Wasser.

Die erfindungsgemäßen Bindemittelzusammensetzungen kommen vorzugsweise in wässrigen Anstrichmitteln zum Einsatz. Diese Anstrichmittel liegen beispielsweise in Form eines unpigmentierten Systems (Klarlacks) oder eines pigmentierten Systems vor. Der Anteil der Pigmente kann durch die Pigmentvolumenkonzentration (PVK) beschrieben werden. Die PVK beschreibt das Verhältnis des Volumens an Pigmenten ($V_P$) und Füllstoffen ($V_F$) zum Gesamtvolumen, bestehend aus den Volumina an Bindemittel ($V_B$), Pigmenten und Füllstoffen eines getrockneten Beschichtungsfilms in Prozent: $PVK = (V_P + V_F) \times 100 / (V_P + V_F + V_B)$. Anstrichmittel lassen sich anhand der PVK beispielsweise wie folgt einteilen:

| | |
|---|---|
| hochgefüllte Innenfarbe, waschbeständig, weiß/matt | PVK = ca. 85 |
| Innenfarbe, scheuerbeständig, weiß/matt | PVK = ca. 80 Außenfassaden- |
| farbe, weiß | PVK = ca. 45-55 |
| Halbglanzfarbe, seidenmatt | PVK = ca. 35 |
| Halbglanzfarbe, seidenglänzend | PVK = ca. 25 |
| Hochglanzfarbe | PVK = ca. 15-25 |
| Klarlack | PVK = < 5 |

Diese Dispersionen werden bevorzugt eingesetzt in Formulierungen mit einer PVK < 50, besonders bevorzugt PVK <40.

Geeignete Füllstoffe in Klarlacksystemen sind z. B. Mattierungsmittel, die so gewünscht den Glanz stark beeinträchtigen. Mattierungsmittel sind in der Regel transparent und können sowohl organisch als auch anorganisch sein. Anorganische Füllstoffe auf Basis von Silika sind am besten geeignet und sind weit verbreitet im Handel erhältlich. Beispiele sind die Syloid®-Marken von W.R. Grace & Company und die Acematt®-Marken von der Fa. Evonik GmbH. Organische Mattierungsmittel sind z.B. erhältlich von der Fa. BYK-Chemie GmbH unter die Ceraflour®- und die Ceramat®-Marken, von der Fa. Deuteron GmbH unter die Deuteron MK®-Marke. Andere geeignete Füllstoffe für Dispersionsfarben sind Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe.

Feinteilige Füllstoffe können auch zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Geeignete Pigmente sind beispielsweise anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Geeignet sind auch synthetische Weißpigmente mit Lufteinschlüssen zur Erhöhung der Lichtstreuung, wie die Ropaque®- und AQACell®-Dispersionen. Weiterhin geeignet sind die Lyconyl®-Marken der Fa. BASF SE, wie z.B. das Lyconyl®-Gelb, Luconyl®-Braun und Lyconyl®-Rot, insbesondere die transparanten Varianten.

Das erfindungsgemäße Beschichtungsmittel (wässrige Anstrichmittel) kann neben der Polymerdispersion, gegebenenfalls zusätzliche filmbildende Polymere, Pigment und weitere Hilfsmittel enthalten.

Zu den üblichen Hilfsmitteln zählen Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Wichtiger sind die Filmbildehilfsmittel, die Verdicker und Entschäumer. Geeignete Filmbildehilfsmittel sind z.B. Texanol® von der Fa. Eastman Chemicals und die Glykolether und -Ester z.B. im Handel erhältlich von BASF SE, unter den Namen Solvenon® und Lusolvan®, und von Dow unter den Handelsnamen Dowanol®. Die Menge beträgt vorzugsweise <10 Gew.-% und besonders bevorzugt < 5 Gew.-% auf Gesamtformulierung. Es ist auch möglich völlig ohne Lösemittel zu formulieren.

Weitere geeignete Hilfsmittel sind Verlaufsmittel, Entschäumer, Biozide und Verdicker. Geeignete Verdicker sind z. B. Assoziativverdicker, wie Polyurethanverdicker. Die Menge des Verdickers beträgt vorzugsweise weniger als 2,5 Gew.-%, besonders bevorzugt weniger als 1,5 Gew.-% Verdicker, bezogen auf Feststoffgehalt des Anstrichmittels. Weitere Formulierungshinweise für Holzanstriche sind ausführlich beschrieben in ‚water-based acrylates for decorative coatings' von den Autoren M. Schwartz und R. Baumstark, ISBN 3-87870-726-6.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten, und anschließend erst das polymere Bindemittel, d. h. in der Regel die wässrige Dispersion des Polymeren mit der Pigmentpaste bzw. Pigmentdispersion zu vermischen.

Das erfindungsgemäße Anstrichmittel kann in üblicher Weise auf Substrate aufgebracht werden, z. B. durch Streichen, Spritzen, Tauchen, Rollen, Rakeln.

Die erfindungsgemäßen Anstrichmittel zeichnen sich aus durch einfache Handhabung und gute Verarbeitungseigenschaften. Die Anstrichmittel sind schadstoffarm. Sie haben gute anwendungstechnische Eigenschaften, z. B. eine gute Wasserfestigkeit, gute Nasshaftung, und gute Blockfestigkeit, eine gute Überstreichbarkeit und sie zeigen beim Auftragen einen guten Verlauf. Das verwendete Arbeitsgerät lässt sich leicht mit Wasser reinigen.

Die Erfindung soll anhand nachfolgender nicht einschränkender Beispiele erläutert werden.

Beispiele

a) Herstellung der wässrigen Polymerisatdispersionen

Der Feststoffgehalt (FG) wurde generell bestimmt, indem eine definierte Menge der wässrigen Polymerisatdispersion (ca. 1 g) in einem Aluminiumtiegel mit einem Innendurchmesser von ca. 5 cm bei 140 °C in einem Trockenschrank bis zur Gewichtskonstanz getrocknet wurde. Es wurden zwei separate Messungen durchgeführt. Die in den Beispielen angegebenen Werte stellen den Mittelwert der jeweiligen beiden Messergebnisse dar. Die Bestimmung der Mindestfilmbildetemperatur (MFT) erfolge in Anlehnung an Ullmanns Enzyklopädie der technischen Chemie, 4. Aufl., Bd. 19, Verlag Chemie, Weinheim (1980), S. 17. Als Messgerät diente eine Filmbildebank (Metallplatte, an die ein Temperaturgradient angelegt wird). Die Verfilmung erfolgte bei einem Naßschichtdicken von 1 mm. Als Mindestfilmbildetemperatur wird die Temperatur angegeben, bei der der Film beginnt, rissig zu werden.

Die Glasübergangstemperaturen lassen sich bestimmen mittels Dynamischer Differenzkalorimetrie (Dynamic Scanning Calorimetry, DSC, laut ASTM D 3418-08; registriert werden sogenannte Mittelpunkttemperaturen).

Vergleichsbeispiel 1

In einem mit Dosiereinrichtungen und Temperaturregelung ausgerüsteten Polymerisationsgefäß wurden bei 20 bis 25 °C (Raumtemperatur) unter Stickstoffatmosphäre

| | |
|---|---|
| 200,8 g | entionisiertes Wasser und |
| 35,0 g | einer 15 gew.-%igen wässrigen Lösung von Natriumlaurylsulfat |

vorgelegt und unter Rühren auf 87 °C aufgeheizt. Bei Erreichen dieser Temperatur wurden 29,8 g von Zulauf 1 und anschließend unter Aufrechterhaltung der Temperatur 2,0 g von Zulauf 3 zugegeben und 5 Minuten polymerisiert. Danach wurden zeitgleich beginnend die Restmenge von Zulauf 1 innerhalb von 120 Minuten und parallel dazu die Restmenge von Zulauf 3 innerhalb von 165 Minuten mit gleichbleibenden Mengenströmen kontinuierlich zudosiert. Nach dem Ende von Zulauf 1 wurde Zulauf 2 gestartet und innerhalb von 45 Minuten mit gleichbleibendem Mengenstrom kontinuierlich zudosiert.

Zulauf 1 (homogene Mischung aus):

| | |
|---|---|
| 329,1 g | entionisiertes Wasser |
| 23,3 g | einer 15 gew.-%igen wässrigen Lösung von Natriumlaurylsulfat |
| 5,7 g | einer 50 gew.-%igen wässrigen Lösung von Acrylamid |
| 5,1 g | Acrylsäure |
| 27,0 g | einer 25 gew.-%igen Lösung von Ureidomethacrylat in Methylmethacrylat [a] |
| 199,2 g | Methylmethacrylat und |
| 285,5 g | 2-Ethylhexylacrylat |

Zulauf 2 (homogene Mischung aus):

| | |
|---|---|
| 174,4 g | entionisiertes Wasser |
| 8,9 g | einer 15 gew.-%igen wässrigen Lösung von Natriumlaurylsulfat |
| 5,1 g | Acrylsäure |
| 27,0 g | einer 25 gew.-%igen Lösung von Ureidomethacrylat in Methylmethacrylat [a] und |
| 148,2 g | Methylmethacrylat |

Zulauf 3 (homogene Lösung aus):

| | |
|---|---|
| 13,0 g | entionisiertem Wasser und |
| 1,0 g | Natriumperoxodisulfat |

Nach Beendigung der Zuläufe 2 und 3 ließ man das Polymerisationsgemisch noch 30 Minuten bei 87 °C nachreagieren. Daran anschließend wurden dem Polymerisationsgemisch zeitgleich beginnend über separate Zulaufleitungen 22,4 g einer 5 gew.-%igen wässrigen Wasserstoffperoxid-Lösung und eine Lösung aus 1,0 g Ascorbinsäure und 26,5 g entionisiertem Wasser innerhalb von 60 Minuten mit gleichbleibenden Mengenströmen kontinuierlich zudosiert.

Anschließend wurde die erhaltene wässrige Polymerisatdispersion auf Raumtemperatur abgekühlt, mit 5,9 g einer 25 gew.-%igen wässrigen Ammoniaklösung neutralisiert und über einen 125 $\mu$m Filter filtriert.

Die erhaltenen 1544 g der wässrigen Polymerisatdispersion wiesen einen Feststoffgehalt von 45,2 Gew.-% auf. Die MFT betrug 13°C. Die mit entionisiertem Wasser verdünnte wässrige Polymerisatdispersion wies einen mittels dynamischer Lichtstreuung ermittelten Teilchendurchmesser von 95 nm. Die Glasübergangtemperatur der ersten Stufe gemessen mit DSC betrug - 5°C und die der zweiten Stufe 105°C.

a) Plex® 6844-O der Fa. Röhm GmbH

Beispiel 1:

In einem mit Dosiereinrichtungen und Temperaturregelung ausgerüsteten Polymerisationsgefäß wurden bei 20 bis 25 °C (Raumtemperatur) unter Stickstoffatmosphäre

| | |
|---|---|
| 201,4 g | entionisiertes Wasser und |
| 35,1 g | einer 15 gew.-%igen wässrigen Lösung von Natriumlaurylsulfat |

vorgelegt und unter Rühren auf 87 °C aufgeheizt. Bei Erreichen dieser Temperatur wurden 32,4 g von Zulauf 1 und anschließend unter Aufrechterhaltung der Temperatur 2,0 g von Zulauf 3 zugegeben und 5 Minuten polymerisiert. Danach wurden zeitgleich beginnend die Restmenge von Zulauf 1 innerhalb von 130 Minuten und parallel dazu die Restmenge von Zulauf 3 innerhalb von 165 Minuten mit gleichbleibenden Mengenströmen kontinuierlich zudosiert. Nach dem Ende von Zulauf 1 wurde Zulauf 2 gestartet und innerhalb von 35 Minuten mit gleichbleibendem Mengenstrom kontinuierlich zudosiert.

Zulauf 1 (homogene Mischung aus):

| | |
|---|---|
| 363,2 g | entionisiertes Wasser |
| 25,2 g | einer 15 gew.-%igen wässrigen Lösung von Natriumlaurylsulfat |
| 6,2 g | einer 50 gew.-%igen wässrigen Lösung von Acrylamid |
| 5,6 g | Acrylsäure |
| 29,2 g | einer 25 gew.-%igen Lösung von Ureidomethacrylat in Methylmethacrylat [a)] |
| 301,9 g | Methylmethacrylat und |
| 221,9 g | 2-Ethylhexylacrylat |

Zulauf 2 (homogene Mischung aus):

| | |
|---|---|
| 117,9 g | entionisiertes Wasser |
| 7,0 g | einer 15 gew.-%igen wässrigen Lösung von Natriumlaurylsulfat |
| 4,0 g | Acrylsäure |
| 21,1 g | einer 25 gew.-%igen Lösung von Ureidomethacrylat in Methylmethacrylat [a)] und |
| 115,3 g | Methylmethacrylat |

Zulauf 3 (homogene Lösung aus):

| | |
|---|---|
| 14,0 g | einer 7 %igen wässrigen Lösung von Natriumperoxodisulfat |

Nach Beendigung der Zuläufe 2 und 3 ließ man das Polymerisationsgemisch noch 30 Minuten bei 87 °C nachreagieren. Dann wurden 3.1 g einer 25 %igen wässrigen Ammoniak-Lösung zugegeben. Daran anschließend wurden dem Polymerisationsgemisch zeitgleich beginnend über separate Zulaufleitungen 23,0 g einer 5 gew.-%igen wässrigen Wasserstoffperoxid-Lösung und 9.8 g einer 10 %igen wässrigen Lösung von Ascorbinsäure innerhalb von 60 Minuten mit gleichbleibenden Mengenströmen kontinuierlich zudosiert.

Anschließend wurde die erhaltene wässrige Polymerisatdispersion auf Raumtemperatur abgekühlt, mit 2,8 g einer 25 gew.-%igen wässrigen Ammoniaklösung neutralisiert und über einen 125 $\mu$m Filter filtriert.

Die erhaltene wässrige Polymerisatdispersion wies einen Feststoffgehalt von 44,7 Gew.-% auf. Der mittels dynamischer Lichtstreuung ermittelte Teilchendurchmesser wurde zu 60 nm bestimmt. Gemäß Dynamischer Differenzkalorimetrie betrugen die Glasumwandlungstemperaturen 27 °C und 107 °C.

Beispiel 2:

In einem mit Dosiereinrichtungen und Temperaturregelung ausgerüsteten Polymerisationsgefäß wurden bei 20 bis 25 °C (Raumtemperatur) unter Stickstoffatmosphäre

| | |
|---|---|
| 201,4 g | entionisiertes Wasser und |
| 35,1 g | einer 15 gew.-%igen wässrigen Lösung von Natriumlaurylsulfat |

vorgelegt und unter Rühren auf 87 °C aufgeheizt. Bei Erreichen dieser Temperatur wurden 32,4 g von Zulauf 1 und anschließend unter Aufrechterhaltung der Temperatur 2,0 g von Zulauf 3 zugegeben und 5 Minuten polymerisiert. Danach wurden zeitgleich beginnend die Restmenge von Zulauf 1 innerhalb von 130 Minuten und parallel dazu die Restmenge von Zulauf 3 innerhalb von 165 Minuten mit gleichbleibenden Mengenströmen kontinuierlich zudosiert. Nach dem Ende von Zulauf 1 wurde Zulauf 2 gestartet und innerhalb von 35 Minuten mit gleichbleibendem Mengenstrom kontinuierlich zudosiert.

Zulauf 1 (homogene Mischung aus):

| | |
|---|---|
| 288,3 g | entionisiertes Wasser |
| 25,2 g | einer 15 gew.-%igen wässrigen Lösung von Natriumlaurylsulfat |
| 6,2 g | einer 50 gew.-%igen wässrigen Lösung von Acrylamid |
| 79,2 g | einer 7 gew.-%igen wässrigen Lösung von Itakonsäure |
| 29,2 g | einer 25 gew.-%igen Lösung von Ureidomethacrylat in Methylmethacrylat [a] |
| 301,9 g | Methylmethacrylat und |
| 221,9 g | 2-Ethylhexylacrylat |

Zulauf 2 (homogene Mischung aus):

| | |
|---|---|
| 117,9 g | entionisiertes Wasser |
| 7,0 g | einer 15 gew.-%igen wässrigen Lösung von Natriumlaurylsulfat |
| 4,0 g | Acrylsäure |
| 21,1 g | einer 25 gew.-%igen Lösung von Ureidomethacrylat in Methylmethacrylat [a] und |
| 115,3 g | Methylmethacrylat |

Zulauf 3 (homogene Lösung aus):

| | |
|---|---|
| 14,0 g | einer 7 %igen wässrigen Lösung von Natriumperoxodisulfat |

Nach Beendigung der Zuläufe 2 und 3 ließ man das Polymerisationsgemisch noch 30 Minuten bei 87 °C nachreagieren. Dann wurden 3.1 g einer 25 %igen wässrigen Ammoniak-Lösung zugegen. Daran anschließend wurden dem Polymerisationsgemisch zeitgleich beginnend über separate Zulaufleitungen 23,0 g einer 5 gew.-%igen wässrigen Wasserstoffperoxid-Lösung und 9,8 g einer 10 % gew.-%igen wässrigen Lösung von Ascorbinsäure innerhalb von 60 Minuten mit gleichbleibenden Mengenströmen kontinuierlich zudosiert.

Anschließend wurde die erhaltene wässrige Polymerisatdispersion auf Raumtemperatur abgekühlt, mit 5,6 g einer 25 gew.-%igen wässrigen Ammoniaklösung neutralisiert und über einen 125 μm Filter filtriert.

Die erhaltene wässrige Polymerisatdispersion wies einen Feststoffgehalt von 44,7 Gew.-% auf. Der mittels dynamischer Lichtstreuung ermittelte Teilchendurchmesser wurde zu 87 nm bestimmt. Gemäß Dynamischer Differenzkalorimetrie betrugen die Glasumwandlungstemperaturen 25 °C und 105 °C.

Beispiel 3:

In einem mit Dosiereinrichtungen und Temperaturregelung ausgerüsteten Polymerisationsgefäß wurden bei 20 bis 25 °C (Raumtemperatur) unter Stickstoffatmosphäre

|  | |
|---|---|
| 203,6 g | entionisiertes Wasser und |
| 35,5 g | einer 15 gew.-%igen wässrigen Lösung von Natriumlaurylsulfat |

vorgelegt und unter Rühren auf 80 °C aufgeheizt. Bei Erreichen dieser Temperatur wurden 23,5 g von Zulauf 1 und anschließend unter Aufrechterhaltung der Temperatur 8,8 g von Zulauf 3 zugegeben und 5 Minuten polymerisiert. Danach wurden zeitgleich beginnend die Restmenge von Zulauf 1 innerhalb von 150 Minuten und parallel dazu die Restmenge von Zulauf 3 innerhalb von 195 Minuten mit gleichbleibenden Mengenströmen kontinuierlich zudosiert. Nach dem Ende von Zulauf 1 wurde Zulauf 2 gestartet und innerhalb von 45 Minuten mit gleichbleibendem Mengenstrom kontinuierlich zudosiert.

Zulauf 1 (homogene Mischung aus):

|  | |
|---|---|
| 278,8 g | entionisiertes Wasser |
| 23,7 g | einer 15 gew.-%igen wässrigen Lösung von Natriumlaurylsulfat |
| 5,8 g | einer 50 gew.-%igen wässrigen Lösung von Acrylamid |
| 5,2 g | Acrylsäure |
| 27,4 g | einer 25 gew.-%igen Lösung von Ureidomethacrylat in Methylmethacrylat [a)] |
| 60,0 g | Methylmethacrylat und |
| 289,4 g | 2-Ethylhexylacrylat |
| 141,9 g | Acrylnitril nach 20 Minuten in Zulauf 1 |

Zulauf 2 (homogene Mischung aus):

|  | |
|---|---|
| 99,0 g | entionisiertes Wasser |
| 9,0 g | einer 15 gew.-%igen wässrigen Lösung von Natriumlaurylsulfat |
| 5,2 g | Acrylsäure |
| 27,4 g | einer 25 gew.-%igen Lösung von Ureidomethacrylat in Methylmethacrylat [a)] und |
| 150,2 g | Methylmethacrylat |

Zulauf 3 (homogene Lösung aus):

|  | |
|---|---|
| 60,8 g | einer 7 %igen wässrigen Lösung von Natriumperoxodisulfat |

Nach Beendigung der Zuläufe 2 und 3 ließ man das Polymerisationsgemisch noch 30 Minuten bei 80 °C nachreagieren. Dann wurden 3.1 g einer 25 %igen wässrigen Ammoniak-Lösung zugegen. Daran anschließend wurden dem Polymerisationsgemisch zeitgleich beginnend über separate Zulaufleitungen 56,8 g einer 5 gew.-%igen wässrigen Wasserstoffperoxid-Lösung und 51,1 g einer 10 %igen wässrigen Lösung von Ascorbinsäure innerhalb von 60 Minuten mit gleichbleibenden Mengenströmen kontinuierlich zudosiert.

Anschließend wurde die erhaltene wässrige Polymerisatdispersion auf Raumtemperatur abgekühlt, mit 6,8 g einer 25 gew.-%igen wässrigen Ammoniaklösung neutralisiert und über einen 125 $\mu$m Filter filtriert.

Die erhaltene wässrige Polymerisatdispersion wies einen Feststoffgehalt von 44,3 Gew.-% auf. Der mittels dynamischer Lichtstreuung ermittelte Teilchendurchmesser wurde zu 129 nm bestimmt. Die Glasübergangtemperatur der ersten Stufe gemessen mit DSC betrug 27°C und die der zweiten Stufe 107°C.

Vergleichsbeispiel 2:

In einem mit Dosiereinrichtungen und Temperaturregelung ausgerüsteten Polymerisationsgefäß wurden bei 20 bis 25 °C (Raumtemperatur) unter Stickstoffatmosphäre

| 201,4 g | entionisiertes Wasser und |
|---|---|
| 35,1 g | einer 15 gew.-%igen wässrigen Lösung von Natriumlaurylsulfat |

vorgelegt und unter Rühren auf 87 °C aufgeheizt. Bei Erreichen dieser Temperatur wurden 32,5 g von Zulauf 1 und anschließend unter Aufrechterhaltung der Temperatur 2,0 g von Zulauf 3 zugegeben und 5 Minuten polymerisiert. Danach wurden zeitgleich beginnend die Restmenge von Zulauf 1 innerhalb von 130 Minuten und parallel dazu die Restmenge von Zulauf 3 innerhalb von 165 Minuten mit gleichbleibenden Mengenströmen kontinuierlich zudosiert. Nach dem Ende von Zulauf 1 wurde Zulauf 2 gestartet und innerhalb von 35 Minuten mit gleichbleibendem Mengenstrom kontinuierlich zudosiert.

Zulauf 1 (homogene Mischung aus):

| 290,5 g | entionisiertes Wasser |
|---|---|
| 25,2 g | einer 15 gew.-%igen wässrigen Lösung von Natriumlaurylsulfat |
| 6,2 g | einer 50 gew.-%igen wässrigen Lösung von Acrylamid |
| 79,2 g | einer 7 gew.-%igen Lösung von Itakonsäure |
| 29,2 g | einer 25 gew.-%igen Lösung von Ureidomethacrylat in Methylmethacrylat [a)] und |
| 301,9 g | Methylmethacrylat und |
| 221,9 g | 2-Ethylhexylacrylat |
| 1,4 g | tert.-Dodecylmercaptan |

Zulauf 2 (homogene Mischung aus):

| 117,9 g | entionisiertes Wasser |
|---|---|
| 7,0 g | einer 15 gew.-%igen wässrigen Lösung von Natriumlaurylsulfat |
| 4,0 g | Acrylsäure |
| 21,1 g | einer 25 gew.-%igen Lösung von Ureidomethacrylat in Methylmethacrylat [a)] und |
| 115,3 g | Methylmethacrylat |

Zulauf 3 (homogene Lösung aus):

| 14,0 g | einer 7 %igen wässrigen Lösung von Natriumperoxodisulfat |
|---|---|

Nach Beendigung der Zuläufe 2 und 3 ließ man das Polymerisationsgemisch noch 30 Minuten bei 87 °C nachreagieren. Dann wurden 3.1 g einer 25 %igen wässrigen Ammoniak-Lösung zugegen. Daran anschließend wurden dem Polymerisationsgemisch zeitgleich beginnend über separate Zulaufleitungen 22,5 g einer 5 gew.-%igen wässrigen Wasserstoffperoxid-Lösung und 9,8 g einer 10 %igen wässrigen Lösung von Ascorbinsäure innerhalb von 60 Minuten mit gleichbleibenden Mengenströmen kontinuierlich zudosiert.

Anschließend wurde die erhaltene wässrige Polymerisatdispersion auf Raumtemperatur abgekühlt, mit 5,6 g einer 25 gew.-%igen wässrigen Ammoniaklösung neutralisiert und über einen 125 $\mu$m Filter filtriert.

Die erhaltene wässrige Polymerisatdispersion wies einen Feststoffgehalt von 44,4 Gew.-% auf. Der mittels dynamischer Lichtstreuung ermittelte Teilchendurchmesser wurde zu 86 nm bestimmt. Die Glasübergangtemperatur der ersten Stufe gemessen mit DSC betrug 21 °C und die der zweiten Stufe 105°C.

Beispiel 4:

In einem mit Dosiereinrichtungen und Temperaturregelung ausgerüsteten Polymerisationsgefäß wurden bei 20 bis 25 °C (Raumtemperatur) unter Stickstoffatmosphäre

| | |
|---|---|
| 201,4 g | entionisiertes Wasser und |
| 35,1 g | einer 15 gew.-%igen wässrigen Lösung von Natriumlaurylsulfat |

vorgelegt und unter Rühren auf 87 °C aufgeheizt. Bei Erreichen dieser Temperatur wurden 32,4 g von Zulauf 1 und anschließend unter Aufrechterhaltung der Temperatur 2,0 g von Zulauf 3 zugegeben und 5 Minuten polymerisiert. Danach wurden zeitgleich beginnend die Restmenge von Zulauf 1 innerhalb von 130 Minuten und parallel dazu die Restmenge von Zulauf 3 innerhalb von 165 Minuten mit gleichbleibenden Mengenströmen kontinuierlich zudosiert. Nach dem Ende von Zulauf 1 wurde Zulauf 2 gestartet und innerhalb von 35 Minuten mit gleichbleibendem Mengenstrom kontinuierlich zudosiert.

Zulauf 1 (homogene Mischung aus):

| | |
|---|---|
| 288,3 g | entionisiertes Wasser |
| 25,2 g | einer 15 gew.-%igen wässrigen Lösung von Natriumlaurylsulfat |
| 6,2 g | einer 50 gew.-%igen wässrigen Lösung von Acrylamid |
| 79,2 g | einer 7 gew.-%igen Lösung von Itakonsäure |
| 320,2 g | Methylmethacrylat und |
| 211,7 g | 2-Ethylhexylacrylat |
| 21,1 g | Acetoacetoxyethylmethacrylat |

Zulauf 2 (homogene Mischung aus):

| | |
|---|---|
| 117,9 g | entionisiertes Wasser |
| 7,0 g | einer 15 gew.-%igen wässrigen Lösung von Natriumlaurylsulfat |
| 4,0 g | Acrylsäure |
| 136,4 g | Methylmethacrylat |

Zulauf 3 (homogene Lösung aus):

| | |
|---|---|
| 14,0 g | einer 7 %igen wässrigen Lösung von Natriumperoxodisulfat |

Nach Beendigung der Zuläufe 2 und 3 ließ man das Polymerisationsgemisch noch 30 Minuten bei 87 °C nachreagieren. Dann wurden 3.1 g einer 25 %igen wässrigen Ammoniak-Lösung zugegen. Daran anschließend wurden dem Polymerisationsgemisch zeitgleich beginnend über separate Zulaufleitungen 23,0 g einer 5 gew.-%igen wässrigen Wasserstoffperoxid-Lösung und 9,8 g einer 10 %igen wässrigen Lösung von Ascorbinsäure innerhalb von 60 Minuten mit gleichbleibenden Mengenströmen kontinuierlich zudosiert.

Anschließend wurde die erhaltene wässrige Polymerisatdispersion auf Raumtemperatur abgekühlt, mit 5,6 g einer 25 gew.-%igen wässrigen Ammoniaklösung neutralisiert und über einen 125 $\mu$m Filter filtriert.

Die erhaltene wässrige Polymerisatdispersion wies einen Feststoffgehalt von 44,2 Gew.-% auf. Der mittels dynamischer Lichtstreuung ermittelte Teilchendurchmesser wurde zu 86 nm bestimmt. Gemäß Dynamischer Differenzkalorimetrie betrug die erste Glasumwandlungstemperatur 30 °C und die zweite 105°C.

Beispiel 5:

In einem mit Dosiereinrichtungen und Temperaturregelung ausgerüsteten Polymerisationsgefäß wurden bei 20 bis 25 °C (Raumtemperatur) unter Stickstoffatmosphäre

| | |
|---|---|
| 201,4 g | entionisiertes Wasser und |
| 35,1 g | einer 15 gew.-%igen wässrigen Lösung von Natriumlaurylsulfat |

vorgelegt und unter Rühren auf 87 °C aufgeheizt. Bei Erreichen dieser Temperatur wurden 32,4 g von Zulauf 1 und anschließend unter Aufrechterhaltung der Temperatur 2,0 g von Zulauf 3 zugegeben und 5 Minuten polymerisiert. Danach wurden zeitgleich beginnend die Restmenge von Zulauf 1 innerhalb von 130 Minuten und parallel dazu die Restmenge von Zulauf 3 innerhalb von 165 Minuten mit gleichbleibenden Mengenströmen kontinuierlich zudosiert. Nach dem Ende von Zulauf 1 wurde Zulauf 2 gestartet und innerhalb von 35 Minuten mit gleichbleibendem Mengenstrom kontinuierlich zudosiert.

Zulauf 1 (homogene Mischung aus):

| | |
|---|---|
| 288,3 g | entionisiertes Wasser |
| 25,2 g | einer 15 gew.-%igen wässrigen Lösung von Natriumlaurylsulfat |
| 6,2 g | einer 50 gew.-%igen wässrigen Lösung von Acrylamid |
| 79,2 g | einer 7 gew.-%igen Lösung von Itakonsäure |
| 382,6 g | Methylmethacrylat und |
| 249,3 g | n-Butylacrylat |
| 21,1 g | Acetoacetoxyethylmethacrylat |

Zulauf 2 (homogene Mischung aus):

| | |
|---|---|
| 117,9 g | entionisiertes Wasser |
| 7,0 g | einer 15 gew.-%igen wässrigen Lösung von Natriumlaurylsulfat |
| 4,0 g | Acrylsäure |
| 136,4 g | Methylmethacrylat |

Zulauf 3 (homogene Lösung aus):

| | |
|---|---|
| 14,0 g | einer 7 %igen wässrigen Lösung von Natriumperoxodisulfat |

Nach Beendigung der Zuläufe 2 und 3 ließ man das Polymerisationsgemisch noch 30 Minuten bei 87 °C nachreagieren. Dann wurden 3.1 g einer 25 %igen wässrigen Ammoniak-Lösung zugegen. Daran anschließend wurden dem Polymerisationsgemisch zeitgleich beginnend über separate Zulaufleitungen 23,0 g einer 5 gew.-%igen wässrigen Wasserstoffperoxid-Lösung und 9,8 g einer 10 %igen wässrigen Lösung von Ascorbinsäure innerhalb von 60 Minuten mit gleichbleibenden Mengenströmen kontinuierlich zudosiert.
Anschließend wurde die erhaltene wässrige Polymerisatdispersion auf Raumtemperatur abgekühlt, mit 5,6 g einer 25 gew.-%igen wässrigen Ammoniaklösung neutralisiert und über einen 125 μm Filter filtriert.
Die erhaltene wässrige Polymerisatdispersion wies einen Feststoffgehalt von 44 Gew.-% auf. Gemäß Dynamischer Differenzkalorimetrie betrug die erste Glasumwandlungstemperatur 29 °C und die zweite 104°C. Der mittels dynamischer Lichtstreuung ermittelte Teilchendurchmesser wurde zu 85 nm bestimmt.

Vergleichsbeispiel 3:

In einem mit Dosiereinrichtungen und Temperaturregelung ausgerüsteten Polymerisationsgefäß wurden bei 20 bis 25 °C (Raumtemperatur) unter Stickstoffatmosphäre

| | | |
|---|---|---|
| 201,4 g | entionisiertes Wasser und |
| 35,1 g | einer 15 gew.-%igen wässrigen Lösung von Natriumlaurylsulfat |

vorgelegt und unter Rühren auf 87 °C aufgeheizt. Bei Erreichen dieser Temperatur wurden 32,4 g von Zulauf 1 und anschließend unter Aufrechterhaltung der Temperatur 2,0 g von Zulauf 3 zugegeben und 5 Minuten polymerisiert. Danach wurden zeitgleich beginnend die Restmenge von Zulauf 1 innerhalb von 130 Minuten und parallel dazu die Restmenge von Zulauf 3 innerhalb von 165 Minuten mit gleichbleibenden Mengenströmen kontinuierlich zudosiert. Nach dem Ende von Zulauf 1 wurde Zulauf 2 gestartet und innerhalb von 35 Minuten mit gleichbleibendem Mengenstrom kontinuierlich zudosiert.

Zulauf 1 (homogene Mischung aus):

| | | |
|---|---|---|
| 288,3 g | entionisiertes Wasser |
| 25,2 g | einer 15 gew.-%igen wässrigen Lösung von Natriumlaurylsulfat |
| 6,2 g | einer 50 gew.-%igen wässrigen Lösung von Acrylamid |
| 79,2 g | einer 7 gew.-%igen Lösung von Itakonsäure |
| 264,0 g | Methylmethacrylat und |
| 267,9 g | 2-Ethylhexylacrylat |
| 21,1 g | Acetoacetoxyethylmethacrylat |

Zulauf 2 (homogene Mischung aus):

| | | |
|---|---|---|
| 117,9 g | entionisiertes Wasser |
| 7,0 g | einer 15 gew.-%igen wässrigen Lösung von Natriumlaurylsulfat |
| 4,0 g | Acrylsäure |
| 136,4 g | Methylmethacrylat |

Zulauf 3 (homogene Lösung aus):

| | | |
|---|---|---|
| 14,0 g | einer 7 %igen wässrigen Lösung von Natriumperoxodisulfat |

Nach Beendigung der Zuläufe 2 und 3 ließ man das Polymerisationsgemisch noch 30 Minuten bei 87 °C nachreagieren. Dann wurden 3.1 g einer 25 %igen wässrigen Ammoniak-Lösung zugegen. Daran anschließend wurden dem Polymerisationsgemisch zeitgleich beginnend über separate Zulaufleitungen 23,0 g einer 5 gew.-%igen wässrigen Wasserstoffperoxid-Lösung und 9,8 g einer 10 %igen wässrigen Lösung von Ascorbinsäure innerhalb von 60 Minuten mit gleichbleibenden Mengenströmen kontinuierlich zudosiert.

Anschließend wurde die erhaltene wässrige Polymerisatdispersion auf Raumtemperatur abgekühlt, mit 5,6 g einer 25 gew.-%igen wässrigen Ammoniaklösung neutralisiert und über einen 125 $\mu$m Filter filtriert.

Die erhaltene wässrige Polymerisatdispersion wies einen Feststoffgehalt von 44,3 Gew.-% auf. Der mittels dynamischer Lichtstreuung ermittelte Teilchendurchmesser wurde zu 91 nm bestimmt. Gemäß Dynamischer Differenzkalorimetrie betrug die erste Glasumwandlungstemperatur 0°C und die zweite 106°C.

b) Anwendungstechnische Untersuchungen

Handcremetestmethode:

Der Farb-Film wurde 1 Woche bei Raumtemperatur getrocknet. Anschließend wurde eine Mischung (Leinöl/Leinöl-Fettsäure 1:1) auf einen repräsentativen Bereich der Farbe aufgetragen. Nach 1 h wurde überschüssige Flüssigkeit abgetupft und die Pendelhärten der exponierten und nicht-exponierten Bereiche des Films im Vergleich gemessen. Nach einer Woche wurde die Pendelhärte erneut bestimmt. Der Abfall der Pendelhärte ist ein Maß für die Handcreme-Empfindlichkeit.

Pendelhärte

Die zu prüfende Beschichtung wurde mit einem Erichsen-Filmaufziehgerät (300 μm nass), auf einer 38 x 7 cm Glasplatte aufgerakelt. Nach 3d Trocknung bei Raumtemperatur wurde auf drei Stellen der Glasplatte drei Messwerte gependelt. Die Messung erfolgte nach König (DIN EN ISO 1522).

Anschmutzverhalten

Auf die getrocknete Beschichtung wurde trockene Aktivkohle deckend aufgestreut. Überschüssige Aktivkohle wurde durch Klopfen auf die Kante bzw. mit Druckluft entfernt. Die angeschmutzten Prüfkörper wurden anschließend in Wasser getaucht, mit jeweils 1 l fließendem Wasser abgespült und schließlich mit einem nassen Schwamm ohne Druck dreimal abgewischt. Nach Trocknung wurde die Verschmutzung visuell beurteilt und mit einer Schulnote bewertet (0 = weiß, 5 = schwarz).

Die anwendungstechnischen Untersuchungen wurden durchgeführt an einer Beschichtung auf Basis der in der Tabelle 1 angegebenen Formulierung.

Tabelle 1: Formulierung

| Wasser | | 80 |
|---|---|---|
| Pigmentverteiler® MD 20 | Dispergiermittel der Fa. BASF SE | 10 |
| Propylenglykol | Lösemittel der Fa. BASF SE | 10 |
| Agitan® 255 | Entschäumer der Fa. Münzing Chemie GmbH | 1,7 |
| Collacral® LR 8990 | Verdicker der Fa. BASF SE | 24 |
| Kronos® 2190 | Weißpigment der Fa. Kronos | 190 |
| Omyacarb® Extra GU | Füllstoff der Fa. Omya | 90 |
| 20 min dispergieren, dann zugeben : | | |
| Solvenon® DPM | Lösemittel der Fa. BASF SE | 20 |
| Texanol® | Lösemittel der Fa. Eastman | 10 |
| Agitan® 255 | Entschäumer der Fa. Münzing Chemie GmbH | 0,3 |
| Dispersion, 45 Gew.-% | | 490 |
| Aquaflow® NHS 300 | Assoziatiwerdicker der Fa. Ashland Inc. | 10 |
| Wasser | | 64 |
| Summe | | 1000 |

Die Komponenten wurden nacheinander zugegeben und nach jedem Schritt homogen gemischt.

Tabelle 2: Prüfungsergebnisse

| a) | Pendelhärte (s) | | | Anschmutzung (Schulnote) | |
|---|---|---|---|---|---|
| | 1 [b)] | 2 [b)] | Verlust (%) | 1 [b)] | 2 [b)] |
| VB 1 | 74 | 6 | 82 | 1 | 5 |

(fortgesetzt)

| a) | Pendelhärte (s) | | | Anschmutzung (Schulnote) | |
|---|---|---|---|---|---|
| | 1 b) | 2 b) | Verlust (%) | 1 b) | 2 b) |
| B 1 | 105 | 28 | 73 | 0 - 1 | 3 |
| B 2 | 102 | 41 | 60 | 0 - 1 | 2 - 3 |
| B 3 | 99 | 70 | 30 | 0 - 1 | 1 |
| VB 2 | 101 | 13 | 87 | 0 - 1 | 4 |
| B 4 | 109 | 69 | 37 | 0 - 1 | 1 - 2 |
| B 5 | 90 | 70 | 22 | 0 - 1 | 2 - 3 |
| VB 3 | 84 | 8 | 90 | 1 | 4 - 5 |
| a) VB = Vergleichsbeispiel, B = Beispiel<br>b) 1 = unbehandelt mit Leinöl Gemisch, 2 = nach Behandlung | | | | | |

**Patentansprüche**

1. Verwendung einer wässrigen Polymerisatdispersion, dadurch erhältlich, dass man eine Zusammensetzung 1 von wenigstens eine ethylenisch ungesättigte Gruppe aufweisenden Verbindungen (Monomeren) nach der Methode der radikalischen wässrigen Emulsionspolymerisation bis zu einem Umsatz von wenigstens 90 %, bezogen auf die zu polymerisierende Monomerenzusammensetzung 1, polymerisiert (Polymerisationsstufe 1) und daran anschließend im Beisein des Produktgemisches der Polymerisationsstufe 1 eine Zusammensetzung 2 von wenigstens eine ethylenisch ungesättigte Gruppe aufweisenden Verbindungen (Monomeren) nach der Methode der radikalischen wässrigen Emulsionspolymerisation mit der Maßgabe polymerisiert (Polymerisationsstufe 2), dass

   a) die Zusammensetzung 1 so beschaffen ist, dass bei alleiniger statistischer Copolymerisation der Zusammensetzung 1 ein Polymerisat 1 erhalten würde, dessen Glasübergangstemperatur Tg1 > 0 °C beträgt,
   b) die Zusammensetzung 2 so beschaffen ist, dass bei alleiniger statistischer Copolymerisation der Zusammensetzung 2 ein Polymerisat 2 erhalten würde, dessen Glasübergangstemperatur Tg2 > 80°C beträgt,
   c) der Betrag der Differenz zwischen Tg1 und Tg2 wenigstens 50°C beträgt,
   d) zusätzlich zu den Monomeren der Zusammensetzungen 1 und 2 wenigstens ein von diesen Monomeren verschiedenes, wenigstens eine ethylenisch ungesättigte Gruppe und das Element Stickstoff enthaltendes Haftmonomeres in einer Menge von 0,1 bis 10 Gew.-%, bezogen auf die Gesamtmenge der zu polymerisierenden Monomeren, einpolymerisiert wird,
   e) von der Gesamtmenge der gemäß d) einzupolymerisierenden Haftmonomeren 20 bis 100 mol-% in der Polymerisationsstufe 1 mit einpolymerisiert werden und
   f) die Menge derjenigen Zusammensetzung i, der der tiefere Grenzwert Tgi zuzuordnen ist, bezogen auf die Gesamtmenge der Zusammensetzungen 1 und 2, 60 bis 90 Gew.-%, beträgt,
   g) zusätzlich zu den Monomeren der Zusammensetzungen 1 und 2 wenigstens ein von diesen Monomeren verschiedenes Monomer, ausgewählt aus der Gruppe Itakonsäure, Acetoacetoxyethyl(meth)acrylat (AAEM), Acrylnitril in einer Menge von 0,2 bis 25 Gew.-%, bezogen auf die Gesamtmenge der zu polymerisierenden Monomeren, einpolymerisiert wird

   für Beschichtungszusammensetzungen mit verbesserter Resistenz gegenüber Chemikalien.

2. Verwendung einer wässrigen Polymerisatdispersion, gemäß Anspruch 1, **dadurch gekennzeichnet, dass** man eine Zusammensetzung 1 von wenigstens eine ethylenisch ungesättigte Gruppe aufweisenden Verbindungen (Monomeren) nach der Methode der radikalischen wässrigen Emulsionspolymerisation bis zu einem Umsatz von wenigstens 98 Gew.-%, bezogen auf die zu polymerisierende Monomerenzusammensetzung 1, polymerisiert (Polymerisationsstufe 1).

3. Verwendung einer wässrigen Polymerisatdispersion, gemäß Anspruch 1 oder 2, **dadurch gekennzeichnet, dass** die Zusammensetzung 1 so beschaffen ist, dass bei alleiniger statistischer Copolymerisation der Zusammensetzung 1 ein Polymerisat 1 erhalten würde, dessen Glasübergangstemperatur Tg1 >20 °C beträgt.

**4.** Verwendung einer wässrigen Polymerisatdispersion, gemäß einem der Ansprüche 1 bis 3, **dadurch gekennzeichnet, dass** die Zusammensetzung 2 so beschaffen ist, dass bei alleiniger statistischer Copolymerisation der Zusammensetzung 2 ein Polymerisat 2 erhalten würde, dessen Glasübergangstemperatur Tg2 > 100°C beträgt.

**5.** Verwendung einer wässrigen Polymerisatdispersion, gemäß einem der Ansprüche 1 bis 4, **dadurch gekennzeichnet, dass**
zusätzlich zu den Monomeren der Zusammensetzungen 1 und 2 wenigstens ein von diesen Monomeren verschiedenes, wenigstens eine ethylenisch ungesättigte Gruppe und das Element Stickstoff enthaltendes Haftmonomeres in einer Menge von 1 bis 3 Gew.-%, bezogen auf die Gesamtmenge der zu polymerisierenden Monomeren, einpolymerisiert wird.

**6.** Verwendung einer wässrigen Polymerisatdispersion, gemäß einem der Ansprüche 1 bis 5, **dadurch gekennzeichnet, dass** die Menge derjenigen Zusammensetzung i, der der tiefere Grenzwert Tgi zuzuordnen ist, bezogen auf die Gesamtmenge der Zusammensetzungen 1 und 2, 70 bis 85 Gew.-% beträgt.

**7.** Verwendung einer wässrigen Polymerisatdispersion, gemäß einem der Ansprüche 1 bis 6, **dadurch gekennzeichnet, dass** zusätzlich zu den Monomeren der Zusammensetzungen 1 und 2 wenigstens ein von diesen Monomeren verschiedenes Monomer, ausgewählt aus der Gruppe Itakonsäure, Acetoacetoxyethyl(meth)acrylat (AAEM), Acrylnitril in einer Menge von 0,2 bis 25 Gew.-%, bezogen auf die Gesamtmenge der zu polymerisierenden Monomeren in der Polymerisationsstufe 1, einpolymerisiert wird.

**8.** Verwendung einer wässrigen Polymerisatdispersion, gemäß einem der Ansprüche 1 bis 7, **dadurch gekennzeichnet**, dassder Betrag der Differenz zwischen Tg1 und Tg2 40 bis 80 °C beträgt.

**9.** Verwendung einer wässrigen Polymerisatdispersion, gemäß einem der Ansprüche 1 bis 8,
**dadurch gekennzeichnet, dass** die Polymerisationsstufe 1 diejenige Monomerenzusammensetzung betrifft, der der tiefere Grenzwert Tgi zuzuordnen ist.

**10.** Verwendung einer wässrigen Polymerisatdispersion, gemäß einem der Ansprüche 1 bis 9, **dadurch gekennzeichnet, dass** die Monomerenzusammensetzung 1 Itakonsäure und/oder Acetoacetoxyethylmethacrylat (AAEM) und/oder Acrylnitril enthält.

**11.** Verwendung einer wässrigen Polymerisatdispersion, gemäß einem der Ansprüche 1 bis 10, **dadurch gekennzeichnet, dass** die Monomerenzusammensetzungen 1 und 2 ausgewählt sind aus der Gruppe der Monomeren n-Butylacrylat, 2-Ethylhexylacrylat, Ethylacrylat, Methylmethacrylat, n-Butylmethacrylat, Styrol, Acrylnitril, Acrylsäure, Methacrylsäure, Acrylamid, Methacrylamid, n-Hydroxyethylacrylat, n-Hydroxyethylmethacrylat, n-Hydroxypropylacrylat, n-Hydroxypropylmethacrylat, Acrylamidopropansulfonsäure sowie Vinylsulfonsäure und deren Alkalimetallsalze, N-(2-Acryloxyethyl)imidazolidin-2-on, N-(2-Methacryloxyethyl)imidazolidin-2-on. (2-Ureidomethacrylat, UMA), Itakonsäure oder Acetoacetoxyethylmethacrylat (AAEM).

**12.** Verwendung einer wässrigen Polymerisatdispersion, gemäß einem der Ansprüche 1 bis 11, **dadurch gekennzeichnet, dass** die Monomerenzusammensetzungen 1 und 2 ausgewählt sind aus der Gruppe n-Butylacrylat, 2-Ethylhexylacrylat, Methylmethacrylat, n-Butylmethacrylat, Acrylsäure, Methacrylsäure, Acrylnitril, Acrylamid, Methacrylamid, N-(2-Acryloxyethyl)imidazolidin-2-on, N-(2-Methacryloxyethyl)imidazolidin-2-on. (2-Ureidomethacrylat, UMA), Itakonsäure oder Acetoacetoxyethylmethacrylat (AAEM).

**13.** Verwendung einer wässrigen Polymerisatdispersion, gemäß einem der Ansprüche 1 bis 12, **dadurch gekennzeichnet, dass** die Monomerenzusammensetzung i mit dem tieferen Tgi-Wert, bezogen auf die Monomerenzusammensetzung i, 10 bis 50 Gew.-% an solchen Monomeren umfaßt, deren Homopolymerisate Tg-Werte oberhalb des tieferen Tgi aufweisen und andererseits die Monomerenzusammensetzung i mit dem höheren Tgi-Wert in gleicher Weise bezogen gleichzeitig 0 bis 25 Gew.-% an solchen Monomeren umfaßt, deren Homopolymerisate Tg-Werte unterhalb des höheren Tgi aufweisen.

**14.** Verwendung einer wässrigen Polymerisatdispersion, gemäß einem der Ansprüche 1 bis 13, **dadurch gekennzeichnet, dass** die erfindungsgemäßen wäßrigen Polymerisatdispersionen, eine MFT ohne Zusatz von Filmbildehilfsmittel < 30°C aufweisen.

**15.** Verwendung einer wässrigen Polymerisatdispersion, gemäß einem der Ansprüche 1 bis 13 zur Verbesserung der Handcremeresistenz.

**16.** Beschichtungsmittel mit verbesserter Resistenz gegenüber Chemikalien in Form einer wässrigen Zusammensetzung, enthaltend

- wenigstens eine erfindungsgemäße Polymerisatdispersion, gemäß einem der Ansprüche 1 bis 14,
- gegebenenfalls wenigstens einen (an)organischen Füllstoff und/oder wenigstens ein (an)organisches Pigment,
- gegebenenfalls wenigstens ein übliches Hilfsmittel, und
- Wasser.

**17.** Beschichtungszusammensetzung gemäß Anspruch 15, **dadurch gekennzeichnet, dass** es sich um ein wässriges Anstrichmittel handelt.

**18.** Beschichtungszusammensetzung gemäß Anspruch 16, **dadurch gekennzeichnet, dass** es sich bei dem Anstrichmittel um einen Seidenglanzlack handelt.

**Claims**

**1.** The use of an aqueous polymer dispersion obtainable by polymerizing a composition 1 of compounds containing at least one ethylenically unsaturated group (monomers) by the method of radical aqueous emulsion polymerization to a conversion of at least 90%, based on the monomer composition 1 to be polymerized (polymerization stage 1), and subsequently, in the presence of the product mixture from polymerization stage 1, polymerizing a composition 2 of compounds containing at least one ethylenically unsaturated group (monomers) by the method of radical aqueous emulsion polymerization (polymerization stage 2), with the proviso that

a) composition 1 is such that random copolymerization of composition 1 alone would give a polymer 1 with a glass transition temperature Tg1 > 0°C,
b) composition 2 is such that random copolymerization of composition 2 alone would give a polymer 2 with a glass transition temperature Tg2 > 80°C,
c) the amount of the difference between Tg1 and Tg2 is at least 50°C,
d) further to the monomers of compositions 1 and 2, at least one adhesion monomer, which is different from these monomers and comprises at least one ethylenically unsaturated group and the element nitrogen, is copolymerized in an amount of 0.1% to 10% by weight, based on the total amount of the monomers to be polymerized,
e) of the total amount of the adhesion monomers to be copolymerized as per d), 20 to 100 mol% are copolymerized in polymerization stage 1, and
f) the amount of the composition i that is accorded the lower limit value Tgi, based on the total amount of the compositions 1 and 2, is 60% to 90% by weight,
g) further to the monomers of compositions 1 and 2, at least one monomer which is different from these monomers and is selected from the group consisting of itaconic acid, acetoacetoxyethyl (meth)acrylate (AAEM), and acrylonitrile is copolymerized in an amount of 0.2% to 25% by weight, based on the total amount of the monomers to be polymerized,
for coating compositions having improved resistance toward chemicals.

**2.** The use of an aqueous polymer dispersion, according to claim 1, wherein a composition 1 of compounds containing at least one ethylenically unsaturated group (monomers) is polymerized by the method of radical aqueous emulsion polymerization to a conversion of at least 98% by weight, based on the monomer composition 1 to be polymerized (polymerization stage 1).

**3.** The use of an aqueous polymer dispersion, according to claim 1 or 2, wherein composition 1 is such that random copolymerization of composition 1 alone would give a polymer 1 with a glass transition temperature Tg1 > 20°C.

**4.** The use of an aqueous polymer dispersion, according to any of claims 1 to 3, wherein composition 2 is such that random copolymerization of composition 2 alone would give a polymer 2 with a glass transition temperature Tg2 > 100°C.

**5.** The use of an aqueous polymer dispersion, according to any of claims 1 to 4, wherein further to the monomers of compositions 1 and 2, at least one adhesion monomer, which is different from these monomers and comprises at least one ethylenically unsaturated group and the element nitrogen, is copolymerized in an amount of 1% to 3% by weight, based on the total amount of the monomers to be polymerized.

6. The use of an aqueous polymer dispersion, according to any of claims 1 to 5, wherein the amount of the composition i that is accorded the lower limit value Tgi, based on the total amount of the compositions 1 and 2, is 70% to 85% by weight.

7. The use of an aqueous polymer dispersion, according to any of claims 1 to 6, wherein further to the monomers of compositions 1 and 2, at least one monomer which is different from these monomers and is selected from the group consisting of itaconic acid, acetoacetoxyethyl (meth)acrylate (AAEM), and acrylonitrile is copolymerized in polymerization stage 1 in an amount of 0.2% to 25% by weight, based on the total amount of the monomers to be polymerized.

8. The use of an aqueous polymer dispersion, according to any of claims 1 to 7, wherein the amount of the difference between Tg1 and Tg2 is 40 to 80°C.

9. The use of an aqueous polymer dispersion, according to any of claims 1 to 8, wherein polymerization stage 1 relates to the monomer composition which is accorded the lower limit value Tgi.

10. The use of an aqueous polymer dispersion, according to any of claims 1 to 9, wherein monomer composition 1 comprises itaconic acid and/or acetoacetoxyethyl methacrylate (AAEM) and/or acrylonitrile.

11. The use of an aqueous polymer dispersion, according to any of claims 1 to 10, wherein monomer compositions 1 and 2 are selected from the group of the monomers n-butyl acrylate, 2-ethylhexyl acrylate, ethyl acrylate, methyl methacrylate, n-butyl methacrylate, styrene, acrylonitrile, acrylic acid, methacrylic acid, acrylamide, methacrylamide, n-hydroxyethyl acrylate, n-hydroxyethyl methacrylate, n-hydroxypropyl acrylate, n-hydroxypropyl methacrylate, acrylamidopropanesulfonic acid, and also vinylsulfonic acid, and the alkali metal salts thereof, N-(2-acryloyloxyethyl)imidazolidin-2-one, N-(2-methacryloyloxyethyl)imidazolidin-2-one (2-ureidomethacrylate, UMA), itaconic acid or acetoacetoxyethyl methacrylate (AAEM).

12. The use of an aqueous polymer dispersion, according to any of claims 1 to 11, wherein monomer compositions 1 and 2 are selected from the group of n-butyl acrylate, 2-ethylhexyl acrylate, methyl methacrylate, n-butyl methacrylate, acrylic acid, methacrylic acid, acrylonitrile, acrylamide, methacrylamide, N-(2-acryloyloxyethyl)imidazolidin-2-one, N-(2-methacryloyloxyethyl)imidazolidin-2-one (2-ureidomethacrylate, UMA), itaconic acid or acetoacetoxyethyl methacrylate (AAEM).

13. The use of an aqueous polymer dispersion, according to any of claims 1 to 12, wherein the monomer composition i with the lower Tgi value, based on the monomer composition i, comprises 10% to 50% by weight of those monomers whose homopolymers have Tg values above the lower Tgi, and the monomer composition i with the higher Tgi value, on the same basis, at the same time comprises 0% to 25% by weight of monomers whose homopolymers have Tg values below the higher Tgi.

14. The use of an aqueous polymer dispersion, according to any of claims 1 to 13, wherein the aqueous polymer dispersions of the invention have an MFFT, without addition of film-forming assistants, < 30°C.

15. The use of an aqueous polymer dispersion, according to any of claims 1 to 13, for improving the handcream resistance.

16. A coating material having improved resistance toward chemicals, in the form of an aqueous composition comprising

- at least one polymer dispersion of the invention, according to any of claims 1 to 14,
- optionally at least one (in)organic filler and/or at least one (in)organic pigment,
- optionally at least one customary auxiliary, and
- water.

17. The coating composition according to claim 15, which is an aqueous coating material.

**18.** The coating composition according to claim 16, wherein the coating material is a satin-gloss varnish.

**Revendications**

**1.** Utilisation d'une dispersion de polymère aqueuse, pouvant être obtenue par polymérisation d'une composition 1 de composés (monomères) comprenant au moins un groupe éthyléniquement insaturé par la méthode de la polymérisation en émulsion aqueuse radicalaire jusqu'à une conversion d'au moins 90 %, par rapport à la composition de monomères 1 à polymériser (étape de polymérisation 1), puis polymérisation en présence du mélange de produits de l'étape de polymérisation 1 d'une composition 2 de composés (monomères) comprenant au moins un groupe éthyléniquement insaturé par la méthode de la polymérisation en émulsion aqueuse radicalaire (étape de polymérisation 2), à condition que

a) la composition 1 soit telle qu'un polymère 1 dont la température de transition vitreuse Tg1 > 0 °C serait obtenu lors d'une copolymérisation statistique unique de la composition 1,
b) la composition 2 soit telle qu'un polymère 2 dont la température de transition vitreuse Tg2 > 80 °C serait obtenu lors d'une copolymérisation statistique unique de la composition 2,
c) la différence entre Tg1 et Tg2 soit d'au moins 50 °C,
d) en plus des monomères des compositions 1 et 2, au moins un monomère d'adhésivité différent de ces monomères, contenant au moins un groupe éthyléniquement insaturé et l'élément azote, soit polymérisé en une quantité de 0,1 à 10 % en poids, par rapport à la quantité totale des monomères à polymériser,
e) 20 à 100 % en moles de la quantité totale des monomères d'adhésivité à polymériser selon d) soient copolymérisés lors de l'étape de polymérisation 1 et
f) la quantité de la composition i à laquelle est attribuée la valeur limite Tgi la plus faible, par rapport à la quantité totale des compositions 1 et 2, soit de 60 à 90 % en poids,
g) en plus des monomères des compositions 1 et 2, au moins un monomère différent de ces monomères, choisi dans le groupe constitué par l'acide itaconique, le (méth)acrylate d'acétoacétoxyéthyle (AAEM), l'acrylonitrile, soit copolymérisé en une quantité de 0,2 à 25 % en poids, par rapport à la quantité totale des monomères à polymériser,
pour des compositions de revêtement présentant une résistance améliorée aux produits chimiques.

**2.** Utilisation d'une dispersion polymère aqueuse selon la revendication 1, **caractérisée en ce qu'**une composition 1 de composés (monomères) comprenant au moins un groupe éthyléniquement insaturé est polymérisée par la méthode de polymérisation en émulsion aqueuse radicalaire jusqu'à une conversion d'au moins 98 % en poids, par rapport à la composition de monomères 1 à polymériser (étape de polymérisation 1).

**3.** Utilisation d'une dispersion polymère aqueuse selon la revendication 1 ou 2, **caractérisée en ce que** la composition 1 est telle qu'un polymère 1 dont la température de transition vitreuse Tg1 > 20 °C serait obtenu lors d'une copolymérisation statistique unique de la composition 1.

**4.** Utilisation d'une dispersion polymère aqueuse selon l'une quelconque des revendications 1 à 3, **caractérisée en ce que** la composition 2 est telle qu'un polymère 2 dont la température de transition vitreuse Tg2 > 100 °C serait obtenu lors d'une copolymérisation statistique unique de la composition 2.

**5.** Utilisation d'une dispersion polymère aqueuse selon l'une quelconque des revendications 1 à 4, **caractérisée en ce qu'**en plus des monomères des compositions 1 et 2, au moins un monomère d'adhésivité différent de ces monomères, contenant au moins un groupe éthyléniquement insaturé et l'élément azote, est copolymérisé en une quantité de 1 à 3 % en poids, par rapport à la quantité totale des monomères à polymériser.

**6.** Utilisation d'une dispersion polymère aqueuse selon l'une quelconque des revendications 1 à 5, **caractérisée en ce que** la quantité de la composition i à laquelle est attribuée la valeur limite Tgi la plus faible, par rapport à la quantité totale des compositions 1 et 2, est de 70 à 85 % en poids.

**7.** Utilisation d'une dispersion polymère aqueuse selon l'une quelconque des revendications 1 à 6, **caractérisée en ce qu'**en plus des monomères des compositions 1 et 2, au moins un monomère différent de ces monomères, choisi dans le groupe constitué par l'acide itaconique, le (méth)acrylate d'acétoacétoxyéthyle (AAEM), l'acrylonitrile, est copolymérisé en une quantité de 0,2 à 25 % en poids, par rapport à la quantité totale des monomères à polymériser lors de l'étape de polymérisation 1.

8. Utilisation d'une dispersion polymère aqueuse selon l'une quelconque des revendications 1 à 7, **caractérisée en ce que** la différence entre Tg1 et Tg2 est de 40 à 80 °C.

9. Utilisation d'une dispersion polymère aqueuse selon l'une quelconque des revendications 1 à 8, **caractérisée en ce que** l'étape de polymérisation 1 concerne la composition de monomères à laquelle est attribuée la valeur limite Tgi la plus faible.

10. Utilisation d'une dispersion polymère aqueuse selon l'une quelconque des revendications 1 à 9, **caractérisée en ce que** la composition de monomères 1 contient de l'acide itaconique et/ou du méthacrylate d'acétoacétoxyéthyle (AAEM) et/ou de l'acrylonitrile.

11. Utilisation d'une dispersion polymère aqueuse selon l'une quelconque des revendications 1 à 10, **caractérisée en ce que** les compositions de monomères 1 et 2 sont choisies dans le groupe constitué par les monomères acrylate de n-butyle, acrylate de 2-éthylhexyle, acrylate d'éthyle, méthacrylate de méthyle, méthacrylate de n-butyle, styrène, acrylonitrile, acide acrylique, acide méthacrylique, acrylamide, méthacrylamide, acrylate de n-hydroxyéthyle, méthacrylate de n-hydroxyéthyle, acrylate de n-hydroxypropyle, méthacrylate de n-hydroxypropyle, acide acrylamidopropanesulfonique, ainsi qu'acide vinylsulfonique et ses sels de métaux alcalins, N-(2-acryloxyéthyl)imidazolidin-2-one, N-(2-méthacryloxyéthyl)imidazolidin-2-one (2-uréidométhacrylate, UMA), acide itaconique ou méthacrylate d'acétoacétoxyéthyle (AAEM).

12. Utilisation d'une dispersion polymère aqueuse selon l'une quelconque des revendications 1 à 11, **caractérisée en ce que** les compositions de monomères 1 et 2 sont choisies dans le groupe constitué par l'acrylate de n-butyle, l'acrylate de 2-éthylhexyle, le méthacrylate de méthyle, le méthacrylate de n-butyle, l'acide acrylique, l'acide méthacrylique, l'acrylonitrile, l'acrylamide, le méthacrylamide, la N-(2-acryloxyéthyl)imidazolidin-2-one, la N-(2-méthacryloxyéthyl)imidazolidin-2-one (2-uréidométhacrylate, UMA), l'acide itaconique ou le méthacrylate d'acétoacétoxyéthyle (AAEM).

13. Utilisation d'une dispersion polymère aqueuse selon l'une quelconque des revendications 1 à 12, **caractérisée en ce que** la composition de monomères i ayant la valeur Tgi la plus faible comprend, par rapport à la composition de monomères i, 10 à 50 % en poids de monomères dont les homopolymères présentent des valeurs Tg supérieures à la valeur Tgi la plus faible et, d'autre part, la composition de monomères i ayant la valeur Tgi la plus élevée comprend, avec une référence identique, simultanément 0 à 25 % en poids de monomères dont les homopolymères présentent des valeurs Tg inférieures à la valeur Tgi la plus élevée.

14. Utilisation d'une dispersion polymère aqueuse selon l'une quelconque des revendications 1 à 13, **caractérisée en ce que** les dispersions polymères aqueuses selon l'invention présentent sans ajout d'adjuvants filmogènes un MFT < 30 °C.

15. Utilisation d'une dispersion polymère aqueuse selon l'une quelconque des revendications 1 à 13 pour améliorer la résistance aux crèmes pour les mains.

16. Agent de revêtement présentant une résistance améliorée aux produits chimiques sous la forme d'une composition aqueuse, contenant

   - au moins une dispersion polymère selon l'invention, selon l'une quelconque des revendications 1 à 14,
   - éventuellement au moine une charge (in)organique et/ou au moins un pigment (in)organique,
   - éventuellement au moins un adjuvant usuel, et
   - de l'eau.

17. Composition de revêtement selon la revendication 15, **caractérisée en ce qu'**il s'agit d'une peinture aqueuse.

18. Composition de revêtement selon la revendication 16, **caractérisée en ce que** la peinture est un vernis satiné.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9835994 A
- US 20050256257 A
- WO 2004003074 A
- WO 2005058993 A
- EP 1418192 A
- DE 3630356
- DE 4341260 A
- EP 421185 B
- EP 379892 B
- EP 609756 A
- DE 4334178 A
- DE 3902067 A
- US 4269749 A
- DE 4435423 A
- DE 4419518 A
- DE 4435422 A

**In der Beschreibung aufgeführte Nicht-Patentliteratur**

- **T.G. FOX.** *Bull. Am. Phys. Soc.,* 1956, vol. 1, 123
- Ullmanns Enzyklopädie der technischen Chemie. Verlag Chemie, 1980, vol. 19, 18
- **R.W. KREIS ; A.M. SHERMAN.** Ureido Functional Monomer for Promoting Wet Adhesion in Latex Paints, Water-Borne and Higher Solids Coating Symposium. *Developments,* 03. Februar 1988
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme Verlag, 1961, vol. XIV/1, 192-208
- Anlehnung an Ullmanns Enzyklopädie der technischen Chemie. Verlag Chemie, 1980, vol. 19, 17